# EUROPEAN PATENT APPLICATION

(11) **EP 2 237 587 A1**
(43) Date of publication of application: **06.10.2010**
(21) Application number: 08871880.4
(22) Date of filing: 22.12.2008
(51) Int. Cl.: H04W 12/10, H04L 12/66, H04W 36/10

(54) **RADIO COMMUNICATION SYSTEM, BASE STATION DEVICE, GATEWAY DEVICE, AND RADIO COMMUNICATION METHOD**

(30) Priority: 31.01.2008 JP 2008021303
(71) Applicant: NEC Corporation, Minato-ku Tokyo 108-8001 (JP)
(72) Inventor: HAYASHI, Sadafuku, Tokyo 108-8001 (JP); SHIGA, Shingo, Tokyo 108-8001 (JP); TAMURA, Toshiyuki, Tokyo 108-8001 (JP)
(74) Representative: Glawe, Delfs, Moll
(86) International application number: PCT/JP2008/073352
(87) International publication number: WO 2009/096121

(57) **Abstract**

The radio communication system of the present invention includes a base station (10), a mobility management node (20), and a gateway (30). The base station (10) transmits to the mobility management node (20) information of the origination addresses of neighboring base stations of the base station (10). The mobility management node (20) receives information of the origination addresses of the neighboring base stations from the base station (10) and transmits the information of the origination addresses of the neighboring base stations to the gateway (30). The gateway (30) receives information of the origination addresses of the neighboring base stations from the mobility management node (20).

## Description

### Technical Field

The present invention relates to a radio communication system, a base station, a gateway, and a radio communication method.

### Background Art

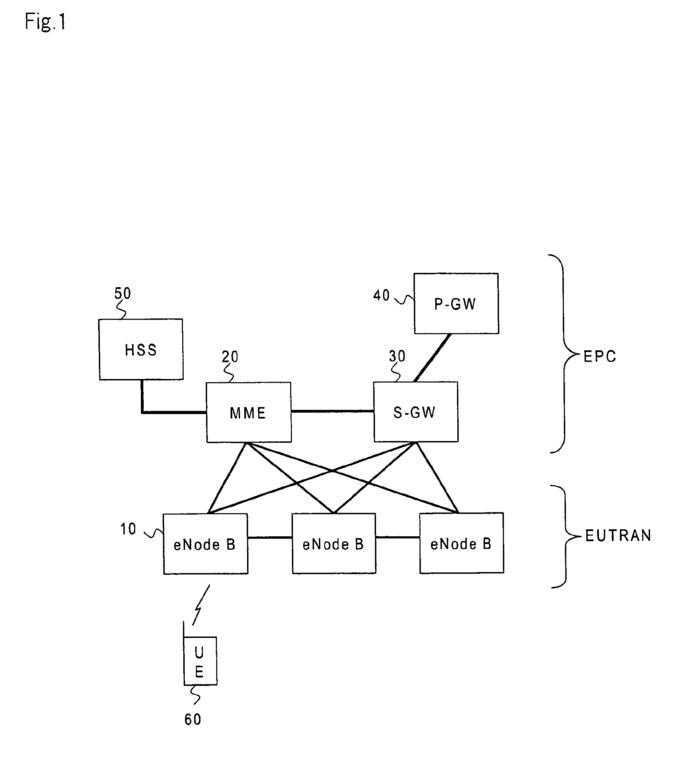

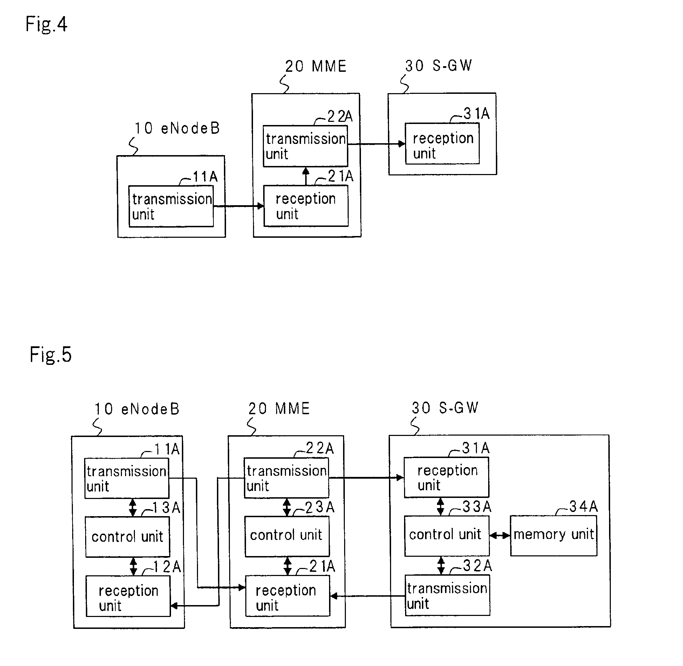

A radio communication system is currently proposed in which EUTRAN (Evolved UMTS Terrestrial Radio Access network, where UMTS = Universal Mobile Telecommunication System) and EPC (Evolved Packet Core) are configured as shown in FIG. 1 in LTE (Long Term Evolution) for which standardization is advancing in the 3GPP (3^{rd} Generation Partnership Projects) (see 4.2.1 of Non-Patent Document 1 and FIG. 4 of Non-Patent Document 2). These names are not thus limited, EUTRAN being referred to as LTE, EPC being referred to as SAE (System Architecture Evolution), and EUTRAN together with EPC being referred to as an EPS (Evolved Packet System).

Referring to FIG. 1, eNode B (evolved Node B) 10, which are base stations, are provided on the EUTRAN side. On the EPC side, MME (Mobility Management Entity) 20 that is a mobility management node, S-GW (Serving Gateway) 30 that is a Gateway, P-GW (Packet Data Network Gateway) 40 that is a host gateway, and HSS (Home Subscriber Server) 50 are provided as the CN (Core Network) Node. In addition, eNode B 10 are connected to UE (User Equipment) 60 that is a radio communication apparatus by way of a radio interface.

Here MME 20 is a node equipped with the mobility management (location updating) function and handover control function of UE 60, and the selection function and bearer management function of S-GW 30 and P-GW 40 (4.4.2 of Non-Patent Document 1). In addition, S-GW 30 is a node that transfers packet data of the user plane between eNode B 10 and P-GW 40. P-GW 40 is a node that transfers transmission packet data from its own network (Home PLMN, where PLMN is a Public Land Mobile Network) to an outside network (Visit PLMN) and received packet data from an outside network to its own network. HSS 50 is a server that holds user information that is used in the authentication of UE 60.

In order to ensure the security of a radio communication system, S-GW 30 must know the origination address of eNode B 10 to verify the safety of uplink packet data from eNode B 10.

According to one method that can be considered by which S-GW 30 learns the origination address of eNode B 10, the origination address of eNode B 10 is set in S-GW 30 by the manual operation of an operator beforehand. However, setting by manual operation of an operator is extremely tedious and may entail the problem of an increase in OPEX (Operation Expenditure) when a large number of eNode B 10 are to be installed.

On the other hand, ignoring security and not making settings by manual operation of an operator can also be considered. In this case, even when S-GW 30 receives packet data from eNode B 10, the received packet data are transmitted without alteration to P-GW 40 of the host node without verifying the origination address of eNode B 10.

The security problem is here described with reference to a case of handover (FIG. 5.5.1.2-1 of Non-Patent Document 1) such as shown in FIG. 2.

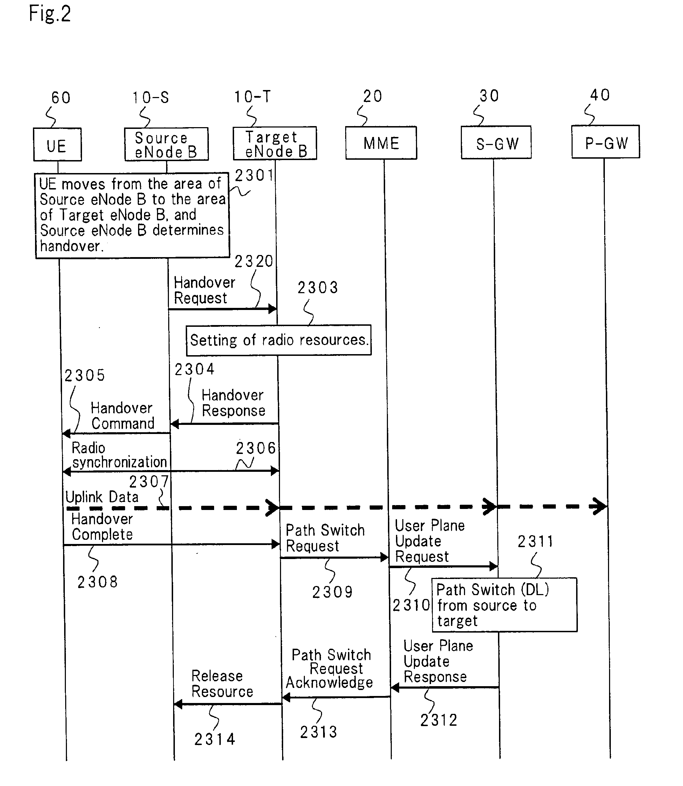

In FIG. 2, eNode B 10 of the movement origin of UE 60 at the time of handover is referred to as Source eNode B 10-S and the movement destination of eNode B 10 is referred to as Target eNode B 10-T (identical hereinbelow).

Referring to FIG. 2, UE 60 has moved from the area of Source eNode B 10-S to the area of Target eNode B 10-T, whereby Source eNode B 10-S is assumed to have made a handover decision (HO decision) in Step 2301.

Source eNode B 10-S then transmits a message (Handover Request message) requesting handover to Target eNode B 10-T in Step 2302.

After setting radio resources in Step 2303, Target eNode B 10-T next transmits a response message (Handover Response Message) to the Handover Request message to Source eNode B 10-S in Step 2304. In Step 2305, Source eNode B 10-S transmits a message (Handover Command message) commanding handover to UE 60.

Next, after synchronization is established between UE 60 and Target eNode B 10-T in Step 2306, UE 60 transmits uplink packet data in Step 2307.

However, even though S-GW 30 receives packet data from Target eNode B 10-T, S-GW 30 does not know the origination address of Target eNode B 10-T and therefore ignores security and, without verifying the origination address of Target eNode B 10-T, transmits the received packet data without alteration to P-GW 40.

Ignoring security in this way raises the potential for the occurrence of serious problems such as system failures caused by proliferation within the network of illegal packet data that carry the danger of an attack in which the transmission of a large volume of packet data paralyzes the radio communication system and prevents the continuation of service, i.e., the danger of a DoS attack (Denial of Service attack).

When UE 60 subsequently transmits a message (Handover Complete message) indicating the completion of handover to Target eNode B 10-T in Step 2308, Target eNode B 10-T transmits a message (Path Switch Request message) requesting path switching to MME 20 in Step 2309, and MME 20 transmits a message (User Plane Update Request message) requesting updating of the user plane to S-GW 30 in Step 2310. S-GW 30, having received this message, carries out path switching of downlink from Source eNode B 10-S to Target eNode B 10-T in Step 2311.

S-GW 30 then transmits a response message (User Plane Update Response message) to the User Plane Update Request message to MME 20 in Step 2312. MME 20 transmits a response message (Path Switch Request Acknowledgement message) to the path switch request message to Target eNode B 10-T in Step 2313, and Target eNode B 10-T transmits a message (Release Resource message) indicating the release of resources in Step 2314.

Accordingly, the safety of packet data received in S-GW 30 from Target eNode B 10-T must be verified even when handover occurs to ensure the security of a radio communication system, and to this end, S-GW 30 must know the origination address of Target eNode B 10-T. However, setting the origination address of eNode B 10 in S-GW 30 by the manual operation of an operator has the potential of leading to an increase in OPEX.

In addition, the problem of security is also critical in a roaming environment of UE 60.

The problem of security in a roaming environment is here described with reference to FIG. 3 (FIG. 4.2.2-1 of Non-Patent Document 1)

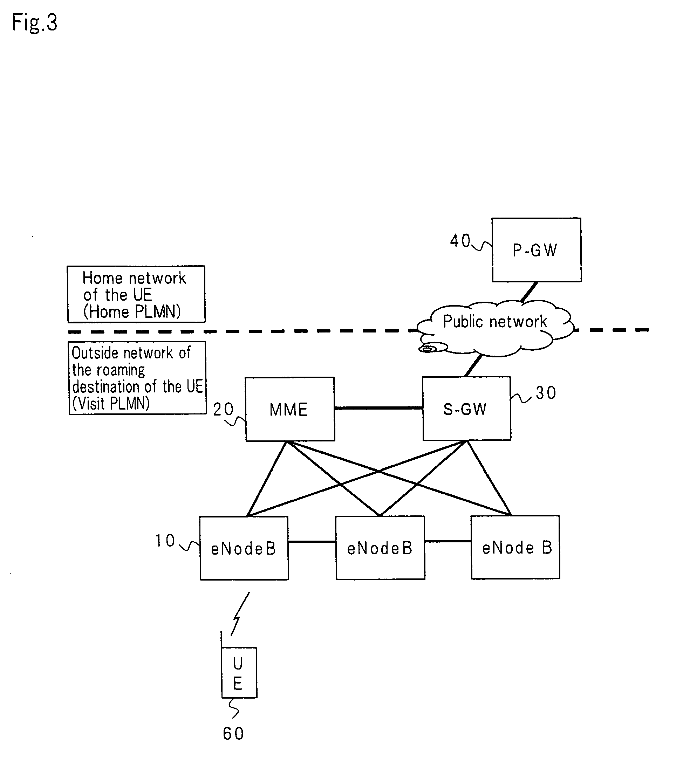

Referring to FIG. 3, eNode B 10, MME 20, and S-GW 30 are provided in the outside network of the roaming destination of UE 60 (Visit PLMN).

S-GW 30 of the outside network and P-GW 40 of the home network (Home PLMN) are normally connected by way of a public network. The public network is, for example, a public Internet network.

When, for example, packet data are received from a public network and transferred to the home network without verifying the safety of these packet data, the danger arises in which serious problems may occur such as proliferation within the home network of packet data having a potential of DoS attacks and system failures.

As a result, P-GW 40 must collate the origination address of the packet data that were received from the public network with the origination address of S-GW 30 that transmitted in these packet data, and, after verifying safety, transfer the received packet data into its own network. For this purpose, P-GW 40 must know the origination address of S-GW 30, but in the event of handover that accompanies change of S-GW 30 in a roaming environment, P-GW 40 cannot learn the origination address of S-GW 30 after the change.

Accordingly, ensuring the security of a radio communication system requires the verification of the safety of packet data received in P-GW 40 of the home network from S-GW 30 of the outside network that is the roaming destination of UE 60 even in the event of handover that accompanies change of S-GW 30 in a roaming environment, and for this purpose, P-GW 40 must know the origination address of S-GW 30 following a change. However, setting of the origination address of S-GW 30 in P-GW 40 by the manual operation of an operator has the potential to increase OPEX.

Summarizing the above, ensuring security in the event of a handover while reducing manual operations by an operator regardless of the roaming environment is a critical issue in a radio communication system.
Non-Patent Document 1: 3GPP TS 23.401, V8.0.0
Non-Patent Document 2: 3GPP TS 36.300, V8.2.0

### Disclosure of the Invention

It is an object of the present invention to provide a radio communication system, a base station, a gateway, and a radio communication method that can solve the above-described problems.

The first radio communication system of the present invention is a radio communication system having a base station, a mobility management node, and a gateway, wherein:
the base station transmits information of the origination addresses of neighboring base stations of the base station to the mobility management node;
the mobility management node receives the information of the origination addresses of the neighboring base stations from the base station, and transmits information of the origination addresses of the neighboring base stations to the gateway; and
the gateway receives information of origination addresses of the neighboring base stations from the mobility management node.

The second radio communication system of the present invention is a radio communication system that has a base station and a gateway; wherein:
the base station transmits to the gateway packet data that contain in a header information of the origination addresses of neighboring base stations of the base station; and
the gateway receives packet data that contain in a header information of the origination addresses of the neighboring base stations from the base station.

The third radio communication system of the present invention is a radio communication system that includes a base station, a mobility management node, and a gateway; wherein:
the base station transmits to the mobility management node information of the origination address of a movement destination base station to which a radio communication apparatus has performed handover from the base station;
the mobility management node receives the information of the origination address of the movement destination base station from the base station, and transmits to the gateway the information of the origination address of the movement destination base station; and
the gateway receives the information of the origination address of the movement destination base station from the mobility management node.

The fourth radio communication system of the present invention is a radio communication system having a base station, a mobility management node, a gateway that is connected to the base station, and a host gateway that is connected to the gateway; wherein:
the gateway, after deciding that a radio communication apparatus is to perform handover that accompanies change to the gateway, transmits to the host gateway information of the origination address of the gateway; and
the host gateway receives information of the origination address of the gateway from the gateway.

The first base station of the present invention includes a transmission unit that transmits to a gateway by way of a mobility management node information of the origination addresses of neighboring base stations of that base station.

The second base station of the present invention includes a transmission unit that transmits to a gateway packet data that contain in a header information of the origination addresses of neighboring base stations of that base station.

The third base station of the present invention includes a transmission unit that transmits to a gateway by way of a mobility management node information of the origination address of a movement destination base station to which a radio communication apparatus has performed handover from the base station.

The first gateway of the present invention includes a reception unit that receives, from the base station by way of a mobility management node, information of the origination addresses of neighboring base stations of the base station.

The second gateway of the present invention includes a reception unit that receives from a base station packet data that contain in a header information of the origination addresses of neighboring base stations of the base station.

The third gateway of the present invention includes a reception unit that receives, from a base station by way of a mobility management node, information of the origination address of a movement destination base station with which a radio communication apparatus has performed handover from the base station.

The fourth gateway of the present invention is a gateway connected between a base station and a host gateway and includes a transmission unit that, after a decision that a radio communication apparatus is to perform handover that accompanies change to the gateway, transmits to the host gateway information of the origination address of the gateway.

The host gateway of the present invention is a host gateway connected to a gateway that is connected to a base station; and includes a reception unit that, after a decision that a radio communication apparatus is to perform handover that accompanies a change to the gateway, receives information of the origination address of the gateway from the gateway.

The first radio communication method of the present invention is a radio communication method realized by a base station and includes a transmission step of transmitting, to a gateway by way of a mobility management node, information of the origination addresses of neighboring base stations of the base station.

The second radio communication method of the present invention is a radio communication method realized by a base station and includes a transmission step of transmitting to a gateway packet data that contain in a header information of the origination addresses of neighboring base stations of the base station.

The third radio communication method of the present invention is a radio communication method realized by a base station and includes a transmission step of transmitting, to a gateway by way of a mobility management node, information of the origination address of a movement destination base station with which a radio communication apparatus has performed handover from the base station.

The fourth radio communication method of the present invention is a radio communication method realized by a gateway and includes a reception step of receiving, from the base station by way of a mobility management node, information of the origination addresses of neighboring base stations of the base station.

The fifth radio communication method of the present invention is a radio communication method realized by a gateway and includes a reception step of receiving, from the base station, packet data that contain in a header information of the origination addresses of neighboring base stations of the base station.

The sixth radio communication method of the present invention is a radio communication method realized by a gateway and includes a reception step of receiving, from a base station by way of a mobility management node, information of the origination address of a movement destination base station with which a radio communication apparatus has performed handover from the base station.

The seventh radio communication method of the present invention is a radio communication method realized by a gateway that is connected between a base station and a host gateway, and includes a transmission step of, after a decision that handover is to be performed that accompanies change to the gateway, transmitting to the host gateway information of the origination address of the gateway.

The eighth radio communication method of the present invention is a radio communication method realized by a host gateway connected to a gateway that is connected to a base station and includes a reception step of receiving information of the origination address of the gateway from the gateway after a decision that a radio communication apparatus is to perform handover that accompanies change to the gateway.

According to one aspect of the present invention, a base station is of a configuration that transmits to a gateway information of the origination addresses of neighboring base stations of that base station or information of the origination address of a movement destination base station of handover performed by a radio communication apparatus.

Accordingly, a gateway can verify the safety of packet data received from the base station despite the occurrence of a handover, whereby the effect of ensuring the security of a radio communication system can be obtained.

The information of the origination address of a base station is transmitted from the base station to the gateway, whereby the effect of enabling a reduction of manual operations by an operator can be obtained.

According to another aspect of the present invention, a gateway is of a configuration that, when a radio communication apparatus performs handover that accompanies change to that gateway, transmits to a host gateway information of the origination address of that gateway.

Accordingly, the host gateway is able to verify the safety of packet data that are received from a gateway despite the occurrence of a handover, whereby the effect of ensuring the security of a radio communication system can be obtained.

Still further, the information of the origination address of a gateway is transmitted from the gateway to the host gateway, whereby the effect of enabling a reduction of manual operations by an operator is obtained.

### Brief Description of the Drawings

FIG. 1 shows the overall configuration of a radio communication system;
FIG. 2 is a sequence chart for explaining an example of the handover operation in a related radio communication system;
FIG. 3 is a view for explaining concepts of roaming in a radio communication system;
FIG. 4 is a block diagram showing the schematic configuration of the radio communication system of the first exemplary embodiment of the present invention;
FIG. 5 is a block diagram showing the detailed configuration of the radio communication system of the first exemplary embodiment of the present invention;
FIG. 6 is a sequence chart for explaining Example 1 of the transmission operation of the origination address of eNode B in the radio communication system of the first exemplary embodiment of the present invention;
FIG. 7 is a sequence chart for explaining Example 2 of the transmission operation of the origination address of eNode B in the radio communication system of the first exemplary embodiment of the present invention;
FIG. 8 is a sequence chart for explaining Example 3 of the transmission operation of the origination address of eNode B in the radio communication system of the first exemplary embodiment of the present invention;
FIG. 9A is a sequence chart for explaining Example 4 of the transmission operation of the origination address of eNode B in the radio communication system of the first exemplary embodiment of the present invention;
FIG. 9B is a sequence chart for explaining Example 4 of the transmission operation of the origination address of eNode B in the radio communication system of the first exemplary embodiment of the present invention;
FIG. 9C is a sequence chart for explaining Example 4 of the transmission operation of the origination address of eNode B in the radio communication system of the first exemplary embodiment of the present invention;
FIG. 9D is a sequence chart for explaining Example 4 of the transmission operation of the origination address of eNode B in the radio communication system of the first exemplary embodiment of the present invention;
FIG. 10 is a sequence chart for explaining Example 1 of the handover operation in the radio communication system of the first exemplary embodiment of the present invention;
FIG. 11 is a sequence chart for explaining Example 2 of the handover operation in the radio communication system of the first exemplary embodiment of the present invention;
FIG. 12 is a sequence chart for explaining Example 2 of the handover operation in the radio communication system of the first exemplary embodiment of the present invention;
FIG. 13 is a sequence chart for explaining Example 3 of the handover operation in the radio communication system of the first exemplary embodiment of the present invention;
FIG. 14 is a sequence chart for explaining Example 3 of the handover operation in the radio communication system of the first exemplary embodiment of the present invention;
FIG. 15 is a block diagram showing the schematic configuration of the radio communication system of the second exemplary embodiment of the present invention;
FIG. 16 is a block diagram showing the detailed configuration of the radio communication system of the second exemplary embodiment of the present invention;
FIG. 17 is a sequence chart for explaining an example of the handover operation in the radio communication system of the second exemplary embodiment of the present invention;
FIG. 18 is an explanatory view of a GTP header according to the second exemplary embodiment of the present invention;
FIG. 19 is a block diagram showing the schematic configuration of the radio communication system of the third exemplary embodiment of the present invention;
FIG. 20 is a block diagram showing the detailed configuration of the radio communication system of the third exemplary embodiment of the present invention;
FIG. 21 is a sequence chart for explaining an example of the handover operation in the radio communication system of the third exemplary embodiment of the present invention;
FIG. 22 is a block diagram showing the schematic configuration of the radio communication system of the fourth exemplary embodiment of the present invention;
FIG. 23 is a block diagram showing the detailed configuration of the radio communication system of the fourth exemplary embodiment of the present invention; and
FIG. 24 is a sequence chart for explaining an example of the handover operation of the radio communication system of the fourth exemplary embodiment of the present invention.

### Best Mode for Carrying Out the Invention

A best mode of carrying out the present invention is next described with reference to the accompanying figures.

In all of the exemplary embodiments described hereinbelow, the overall configuration itself of the radio communication system is identical to the configuration shown in FIG. 1.

### First Exemplary Embodiment

The schematic configuration of the present exemplary embodiment is first described with reference to FIG. 4.

Referring to FIG. 4, eNode B 10 according to the present exemplary embodiment includes transmission unit 11A that transmits to MME 20 messages containing information of the origination addresses of neighboring eNode B 10. The information of the origination addresses of neighboring eNode B 10 can conceivably be information that is set in eNode B 10 by the manual operation of an operator beforehand, but is not limited to such information.

MME 20 according to the present exemplary embodiment includes reception unit 21 A that receives messages from eNode B 10 that contain information of the origination addresses of neighboring eNode B 10 and transmission unit 22A that transmits to S-GW 30 messages that contain information of the origination addresses of neighboring eNode B 10.

S-GW 30 according to the present exemplary embodiment includes reception unit 31 A that receives messages from MME 20 containing information of the origination addresses of neighboring eNode B 10.

The detailed configuration of the present exemplary embodiment is next described with reference to FIG. 5.

Referring to FIG. 5, eNode B 10 according to the present exemplary embodiment includes, in addition to the above-described transmission unit 11A, reception unit 12A and control unit 13A.

Transmission unit 11A is a component that carries out processes of transmitting messages and packet data to MME 20, one example being carrying out the process of transmitting to MME 20 a message containing information of the origination addresses of neighboring eNode B 10 as described hereinabove.

Reception unit 12A carries out processes of receiving messages and packet data from MME 20.

Control unit 13A carries out processes such as generating messages that contain information that is to be transmitted to MME 20.

The transmission and reception of messages and packet data by means of transmission unit 11A, reception unit 12A, and control unit 13A are assumed to be carried out with UE 60, other eNode B 10, and S-GW 30.

MME 20 according to the present exemplary embodiment includes control unit 23A in addition to the above-described reception unit 21A and transmission unit 22A.

Reception unit 21A is a component that carries out processes of receiving messages and packet data from eNode B 10 and S-GW 30, one example being the process of receiving a message that contains information of the origination addresses of a neighboring eNode B 10 from eNode B 10 as described hereinabove.

Transmission unit 22A is a component that carries out processes of transmitting messages and packet data to eNode B 10 and S-GW 30, one example being carrying out a process of transmitting a message containing information of the origination addresses of neighboring eNode B 10 to S-GW 30 as described hereinabove.

Control unit 23A carries out processes such as generating a message containing information that is to be transmitted to eNode B 10 and S-GW 30.

S-GW 30 according to the present exemplary embodiment includes, in addition to reception unit 31A described hereinabove, transmission unit 32A, control unit 33A, and memory unit 34A.

Reception unit 31A carries out processes of receiving messages and packet data from MME 20, one example being the process of receiving a message containing information of the origination address of neighboring eNode B 10 from MME 20 as described hereinabove.

Transmission unit 32A carries out processes of transmitting messages and packet data to MME 20.

Control unit 33A carries out processes such as a process of generating a message containing information that is to be transmitted to MME 20, a process of saving in memory unit 34A information of the origination addresses of neighboring eNode B 10, a process of collating the origination address of packet data that are received from MME 20 with origination addresses saved in memory unit 34A to verify the safety of packet data that have been received.

The transmission and reception of messages and packet data realized by transmission unit 32A, reception unit 31A and control unit 33A are carried out with eNode B 10 and P-GW 40.

The operation of the present exemplary embodiment is next described.

### Example 1 of the operation of transmitting the origination address of eNode B 10

In the present example, eNode B 10 transmits information of the origination address of it own eNode B 10 and the origination addresses of neighboring eNode B 10 to S-GW 30 by way of MME 20 at the time of an attach of UE 60. "Attach" is the initial access to eNode B 10 of UE 60, and for example, corresponds to the initial access after power is introduced.

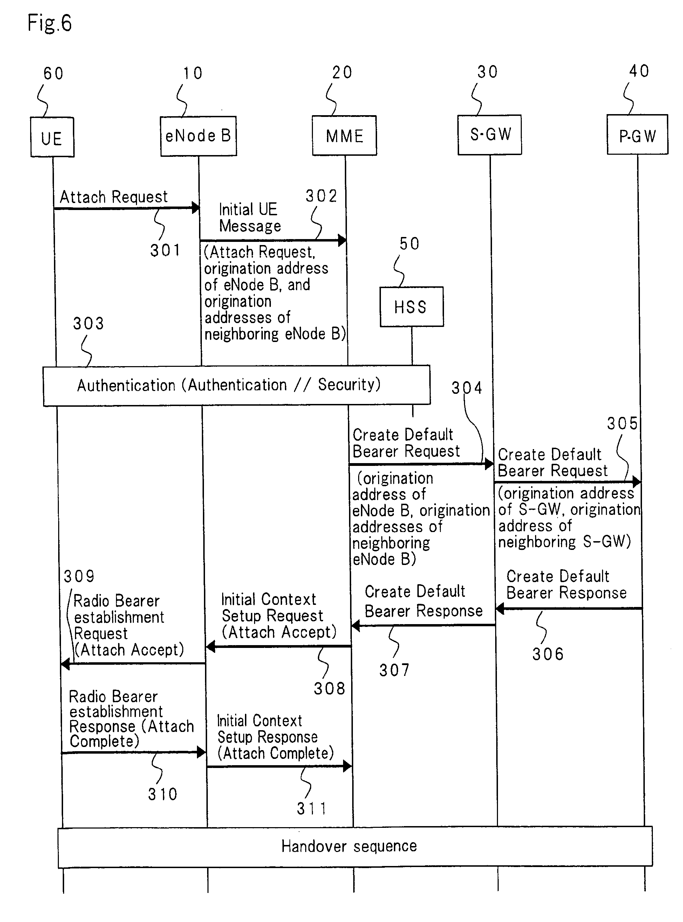

The operation of this example is next described with reference to FIG. 6.

Referring to FIG. 6, UE 60 is assumed to transmit a message (Attach Request message) requesting an attach to eNode B 10 in Step 301.

In Step 302, transmission unit 11A of eNode B 10 then transmits to MME 20 an attach start message (Initial UE Message) to start the attach procedure that contains information of the origination address of its own eNode B 10, the origination addresses of neighboring eNode B 10, and the information of the Attach Request message.

Next, upon the success of authentication of UE 60 by MME 20 using user information saved in HSS 50 in Step 303, transmission unit 22A of MME 20 transmits to S-GW 30 a message (Create Default Bearer Request message) requesting the generation of a bearer that includes information of the origination address of eNode B 10 and the origination addresses of neighboring eNode B 10 in Step 304. In S-GW 30, information of the origination address of eNode B 10 and the origination addresses of neighboring eNode B 10 is saved in memory unit 34A by control unit 33A.

In Step 305, transmission unit 32A of S-GW 30 next transmits to P-GW 40 a message (Create Default Bearer Request message) requesting creation of a bearer that includes the origination address of its own S-GW 30 and the origination addresses of neighboring S-GW 30.

In Step 306, P-GW 40 next transmits to S-GW 30 a response message (Create Default Bearer Response message) to the Create Default Bearer Request message, following which transmission unit 32A of S-GW 30 in Step 307 transmits to MME 20 a response message (Create Default Bearer Response message) to the Create Default Bearer Request message.

Transmission unit 22A of MME 20 then accepts the attach (Attach Accept) in Step 308 and transmits to eNode B 10 a message (Initial Context Setup Request message) requesting initial context setup of UE 60. In Step 309, transmission unit 11A of eNode B 10 next accepts the attach and transmits to UE 60 a message (Radio Bearer Establishment Request message) requesting establishment of a radio bearer.

In Step 310, UE 60 next transmits to eNode B 10 a response message (Radio Bearer Establishment Response message) to the Radio Bearer Establishment Request message. In Step 311, transmission unit 11A of eNode B 10 further transmits to MME 20 a response message (Initial UE Context Response message) to the Initial Context Setup Request message.

Control unit 33A of S-GW 30, upon receiving packet data from eNode B 10, then collates the origination address of the packet data that were received with the origination addresses that are saved in memory unit 34A. If an origination address that matches the origination address of the received packet data is present in memory unit 34A, control unit 33A judges that the
received packet data are safe and uses transmission unit 32A to transfer the received packet data to P-GW 40, but if a matching origination address is not present in memory unit 34A, control unit 33A judges that the received packet data are dangerous and discards the data.

At the time of a subsequent handover of UE 60, the handover sequence described hereinbelow is carried out.

In the example described above, at the time of an attach of UE 60, S-GW 30 is able to acquire from eNode B 10 by way of MME 20 information of the origination address of this eNode B 10 and the origination addresses of neighboring eNode B 10 that have a potential of becoming Target eNode B 10-T.

Accordingly, S-GW 30 is able to verify the safety of packet data received from eNode B 10 despite the occurrence of a handover and can thus ensure the security of the radio communication system.

In the present example, the information of the origination address of eNode B 10 is transmitted from eNode B 10 to S-GW 30 by way of MME 20, manual operations by an operator can therefore be reduced.

In addition, MME 20 is only required to transfer to S-GW 30 information of the origination addresses of eNode B 10 that were received from eNode B 10 in the present example and therefore does not need to store the information of the origination address of eNode B 10.

In the present example, MME 20 is provided with an IP security function and is able to judge whether eNode B 10 is safe or not. In other words, MME 20 is able to judge whether the origination address report is from a safe eNode B 10 or not, and is therefore able to report to S-GW 30 only origination addresses reported from safe eNode B 10 in Step 304 of FIG. 6.

### Example 2 of the operation of transmitting the origination address of eNode B 10

In this example, eNode B 10 transmits to S-GW 30 by way of MME 20 information of the origination address of its own eNode B 10 and the origination addresses of neighboring eNode B 10 at the time of call origination of UE 60.

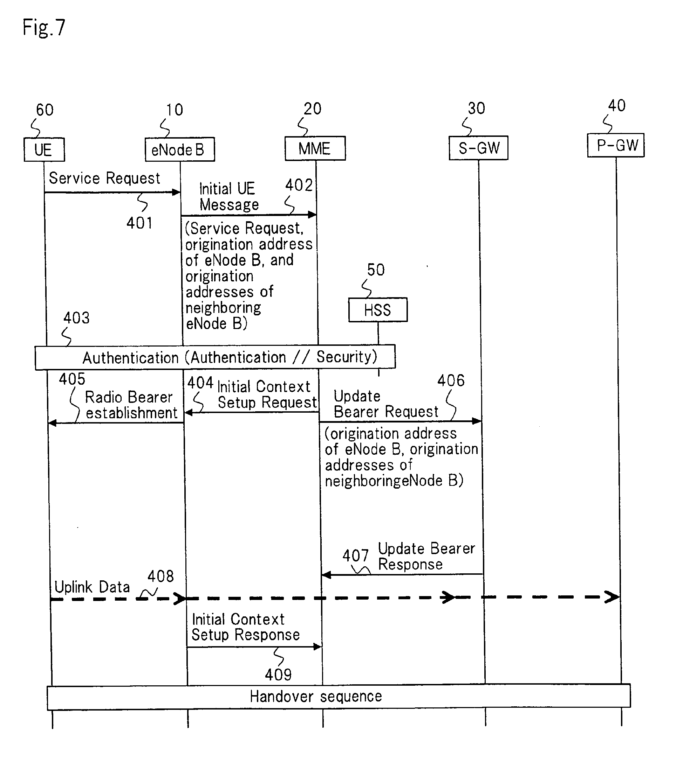

The operation of this example is next described with reference to FIG. 7.

Referring to FIG. 7, in Step 401, UE 60 is assumed to transmit a message (Service Request message) for originating a call to eNode B 10.

In Step 402, transmission unit 11A of eNode B 10 then transmits to MME 20 a message (Initial UE Message) for starting the call origination procedure (Service Request procedure) that includes information of the origination address of its own eNode B 10, the origination addresses of neighboring eNode B 10, and the information of the Service Request message.

Next, upon the success of authentication of UE 60 in Step 403 by means of MME 20 that uses user information that was saved in HSS 50, transmission unit 22A of MME 20 transmits to eNode B 10 a message (Initial Context Setup Request message) requesting setup of the initial context of UE 60 in Step 404, and transmission unit 11A of eNode B 10 transmits to UE 60 a message (Radio Bearer Establishment message) for establishing a radio bearer in Step 405.

In Step 406, transmission unit 22A of MME 20 transmits to S-GW 30 a message (Update Bearer Request message) requesting updating of the bearer that contains information of the origination address of eNode B 10 and the origination addresses of neighboring eNode B 10. In S-GW 30, the information of the origination address of eNode B 10 and the origination addresses of neighboring eNode B 10 is saved in memory unit 34A by control unit 33A.

Transmission unit 32A of S-GW 30 next transmits to MME 20 a response message (Update Bearer Response message) to the Update Bearer Request message in Step 407.

In Step 408, when UE 60 transmits uplink packet data, control unit 33A of S-GW 30 collates the origination address of the packet data that were received from eNode B 10 with origination addresses saved in memory unit 34A. If an origination address that matches the origination address of the received packet data is present in memory unit 34A, control unit 33A judges that the received packet data are safe and uses transmission unit 32A to transfer the data to P-GW 40, but if a matching origination address is not present in memory unit 34A, control unit 33A judges that the received packet data are dangerous and discards the data.

Transmission unit 11A of eNode B 10 then transmits to MME 20 a response message (Initial Context Response message) to the Initial Context Setup Request message in Step 409.

A handover sequence (to be explained) is later carried out at the time of handover of UE 60.

As explained above, at the time of call origination of UE 60, S-GW 30 in the present example is able to acquire, from eNode B 10 by way of MME 20, information of the origination address of that eNode B 10 and origination addresses of the neighboring eNode B 10 that have a potential of becoming Target eNode B 10-T.

Accordingly, S-GW 30 is able to verify the safety of packet data that are received from eNode B 10 despite the occurrence of handover and can therefore ensure the security of the radio communication system.

In the present example, information of the origination address of eNode B 10 is transmitted from eNode B 10 to S-GW 30, whereby manual operation by an operator can be reduced.

In the present example, moreover, MME 20 is only required to transfer to S-GW 30 information of the origination address of eNode B 10 that is received from eNode B 10 and therefore does not need to store the information of the origination address of eNode B 10.

### Example 3 of the operation of transmitting the origination address of eNode B 10

In the present example, eNode B 10 transmits to S-GW 30 by way of MME 20 information of the origination address of its own eNode B 10 and the origination addresses of neighboring eNode B 10 at the time of location updating (TA Update, where TA is Tracking Area) of UE 60. Location updating is carried out to assign to UE 60 a TA that is the area in which paging is carried out at the time of call termination (5.3.3.1 of Non-Patent Document 1).

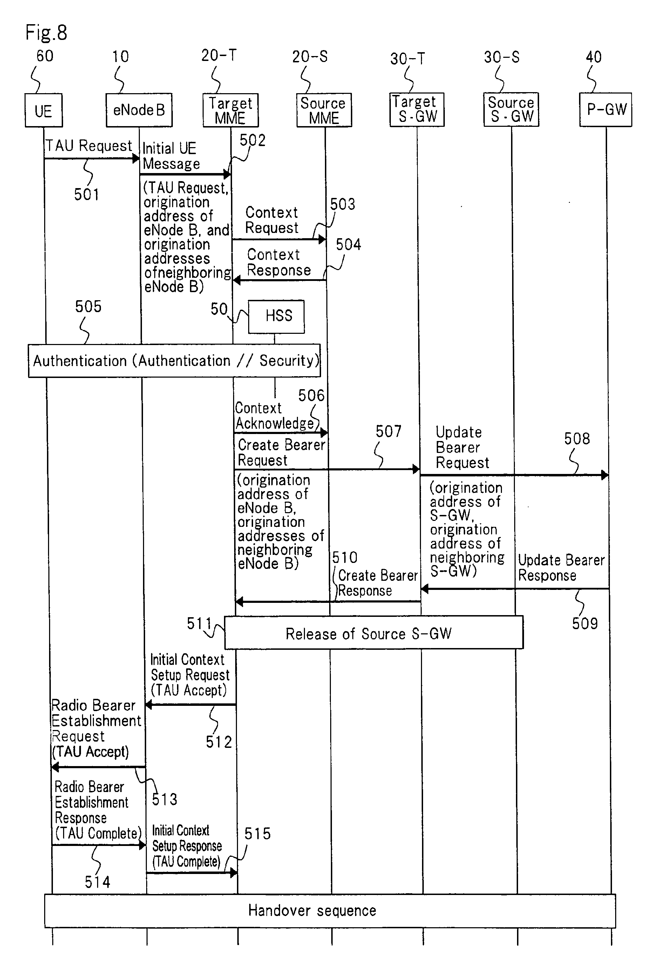

The operation of the present example is next described with reference to FIG. 8.

In FIG. 8, it is assumed that MME 20 and S-GW 30 are changed by the location updating of UE 60, MME 20 and S-GW 30 before the change being referred to as Source MME 20-S and Source S-GW 30-S, respectively, and MME 20 and S-GW 30 after the change being referred to as Target MME 20-T and Target S-GW 30-T, respectively (identical hereinbelow). MME 20 and S-GW 30 before and after the change are determined based on information that is contained in a location update request message (TAU Request message) from UE 60.

Referring to FIG. 8, in Step 501, UE 60 is assumed to transmit a TAU Request message for location updating to eNode B 10.

Transmission unit 11A of eNode B 10 then, in Step 502, transmits to Target MME 20-T a message (Initial UE Message) to start the TA update procedure that includes information of the origination address of its own eNode B 10 and the origination addresses of neighboring eNode B 10 as well as the information of the TAU Request message.

Transmission unit 22A of Target MME 20-T next transmits to Source MME 20-S a message (Context Request message) requesting context information of UE 60 in Step 503. Transmission unit 22A of Source MME 20-S transmits to Target MME 20-T a response message (Context Response message) to the Context Request message in Step 504.

Upon the success of authentication of UE 60 in Step 505 realized by Target MME 20-T that uses user information that was saved in HSS 50, transmission unit 22A of Target MME 20-T in Step 506 transmits, to Source MME 20-S, a message (Context Acknowledgement message) indicating that the context of UE 60 has become valid in Target MME 20-T, and further, transmits in Step 507 a Create Bearer Request message to Target S-GW 30-T that includes information of the origination address of eNode B 10 and the origination addresses of neighboring eNode B 10. In Target S-GW 30-T, the information of the origination address of eNode B 10 and the origination addresses of neighboring eNode B 10 is saved in memory unit 34A by control unit 33A.

In Step 508, transmission unit 32A of Target S-GW 30-T next transmits to P-GW 40 a message (Update Bearer Request message) containing information of the origination address of Target S-GW 30-T and the origination addresses of neighboring S-GW and requesting that the transfer route of data be switched from Source S-GW 30-S to Target S-GW 30-T.

In Step 509, P-GW 40 next transmits to Target S-GW 30-T a response message (Update Bearer Response message) to the Update Bearer Request message. In Step 510, transmission unit 32A of Target S-GW 30-T transmits to Target MME 20-T a response message (Create Bearer Response message) to the Create Bearer Request message.

A bearer release process relating to Source S-GW 30-S is next carried out in Step 511.

In Step 512, transmission unit 22A of Target MME 20-T next transmits to eNode B 10 a message (Initial Context Setup Request message) indicating that the location updating is accepted (TAU Accept). In Step 513, transmission unit 11A of eNode B 10 transmits to UE 60 a message (Radio Bearer Establishment Request message) including the message (TAU Accept message) indicating acceptance of the location updating and requesting the establishment of a radio bearer.

In Step 514, UE 60 next transmits to eNode B 10 a response message (Radio Bearer Establishment Response message) to the Radio Bearer Establishment Request message. In Step 515, transmission unit 11A of eNode B 10 next transmits to Target MME 20-T a response message (Initial Context Setup Response message) to the Initial Context Setup Request message.

When packet data are subsequently received from eNode B 10, control unit 33A of Target S-GW 30-T collates the origination address of the packet data that were received with the origination addresses saved in memory unit 34A. If an origination address that matches the origination address of the received packet data is present in memory unit 34A, control unit 33A judges that the received packet data are safe and uses transmission unit 32A to transfer the data to P-GW 40, but if a matching origination address is not present in memory unit 34A, control unit 33A judges that the received packet data are dangerous and discards the data.

A handover sequence (to be described) is later carried out at the time of handover of UE 60.

In the example described above, at the time of location updating of UE 60, Target S-GW 30-T is able to acquire from eNode B 10 by way of Target MME 20-T the origination address of that eNode B 10 and the origination addresses of neighboring eNode B 10 that have the potential of becoming Target eNode B 10-T.

Accordingly, Target S-GW 30-T is able to verify the safety of packet data that are received from eNode B 10 despite the occurrence of handover and is therefore able to ensure the security of the radio communication system.

In addition, in the present example, an operator is not required to set the origination address of eNode B 10 to Target S-GW 30-T \by manual operation, whereby manual operation of an operator can be reduced.

In the present example, moreover, Target MME 20-T is required only transfer to Target S-GW 30-T the information of the origination address of eNode B 10 that is received from eNode B 10 and does not need to store information of the origination address of eNode B 10.

### Example 4 of the operation of transmitting the origination address of eNode B 10

In the present example, eNode B 10 transmits to MME 20 information of the origination addresses of neighboring eNode B 10 at the time of startup of eNode B 10 and saves the information in MME 20. Next, eNode B 10 transmits to MME 20 information of the origination address of its own eNode B 10 at times of, for example, attach, call origination, and location updating, and MME 20 transmits to S-GW 30 information of the origination address of eNode B 10 that was received from eNode B 10 together with information of the origination addresses of neighboring eNode B 10 that were saved at the time of start up.

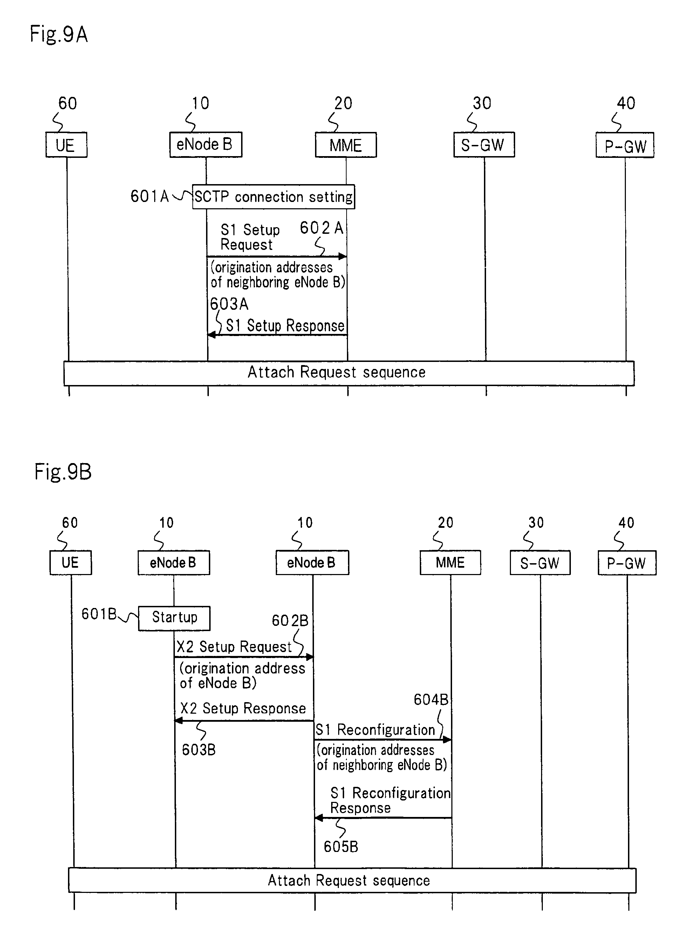

The operation of the present example is next described with reference to FIG. 9A.

Referring to FIG. 9A, when an SCTP (Stream Control Transmission Protocol) connection is set with MME 20 at the time of startup of eNode B 10 in Step 601, transmission unit 11A of eNode B 10 in Step 602A transmits to MME 20 a setup message (S1 Setup Request message) that contains information of the origination addresses of neighboring eNode B 10. In MME 20, information of the origination addresses of neighboring eNode B 10 is saved in a memory unit (not shown) by control unit 23A.

In Step 603A, transmission unit 22A of MME 20 later transmits to eNode B 10 a response message (S1 Setup Response message) to the S1 Setup Request message.

Operations such as the Attach Request sequence shown in FIG. 6 are later carried out.

As a result, control unit 13A of eNode B 10 does not need to include information of the origination addresses of neighboring eNode B 10 in an Initial UE Message in Step 302 of FIG. 6 at the time of, for example, a subsequent attach. In addition, in Step 304 of FIG. 6, control unit 23A of MME 20 is able to further include information of the origination addresses of neighboring eNode B 10 that was saved in a memory unit in a Create Default Bearer Request message and transmit the information to S-GW 30.

In the present example as described above, S-GW 30 is able to acquire from MME 20 the origination addresses of neighboring eNode B 10 that have a potential to become Target eNode B 10-T at the time of an attach, call origination, or location updating. In addition, S-GW 30 is further able to acquire information of the origination address of eNode B 10 from eNode B 10 by way of MME 20 at, for example, the time of an attach.

In the present example as described above, S-GW 30 is able to verify the safety of packet data that are received from eNode B 10 even in the event of a handover, and is thus able to ensure the security of the radio communication system.

In the present example, information of the origination address of eNode B 10 is transmitted to S-GW 30 from eNode B 10 by way of MME 20, whereby manual operation by an operator can be reduced.

In the present example, information of the origination addresses of neighboring eNode B 10 may be transmitted only once at the time of startup, and the information therefore need not be transmitted with each occurrence of, for example, an attach.

In the present example, eNode B 10 transmits to MME 20 information of the origination addresses of neighboring eNode B 10 at the time of startup of its own eNode B 10, but as shown in FIG. 9B, information of the origination addresses of neighboring eNode B 10 that have started up can be transmitted to MME 20 at the time of startup of neighboring eNode B 10.

Referring to FIG. 9B, at the time of startup of Step 601B, transmission unit 11A of eNode B 10 transmits to neighboring eNode B 10 by X2 interface a setup message (X2 Setup Request message) that includes its own origination address in Step 602B. Next, in Step 603B, a response message (X2 Setup Response message) to the X2 setup Request message is transmitted from neighboring eNode B 10. Transmission unit 11A of eNode B 10 then transmits to MME 20 a reconfiguration message (S1 Reconfiguration message) that contains the origination addresses of neighboring eNode B 10 in Step 604B. In Step 605B, a response message (S1 Reconfiguration Response message) to the S1 Reconfiguration message is next transmitted from MME 20.

In the present example, information of the origination addresses of neighboring eNode B 10 is transmitted to MME 20 at the time of startup of eNode B 10. However, depending on the amount of traffic in a particular region in a radio communication system, the re-startup of eNode B 10 is not absolutely necessary to provide safe and optimal communication service, these objectives being achievable by the installation of more eNode B 10 or the alteration of settings of set data.

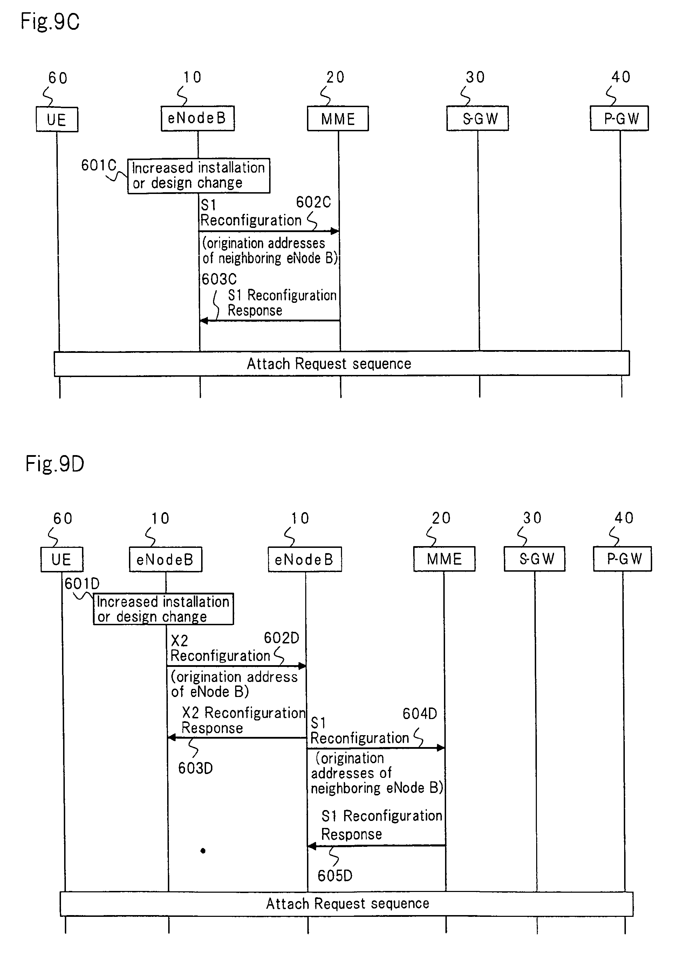

For example, when the installation is increased or settings are changed for its own eNode B 10, information of the origination address of its own eNode B 10 can be transmitted to MME 20 as shown in FIG. 9C.

Referring to FIG. 9C, when an interface card is additionally installed with the increase in traffic in Step 601C, transmission unit 11A of eNode B 10 transmits to MME 20 a reconfiguration message (S1 Reconfiguration message) that contains the origination address of the newly installed interface card in place of S1 Setup in Step 602C. In Step 603C, a response message (S1 Reconfiguration Response message) to the S1 Reconfiguration message is next transmitted from MME 20.

In the event of additional installation or settings alterations of neighboring eNode B 10, information of the origination addresses of neighboring eNode B 10 in which the additional installation or settings changes have occurred can be transmitted to MME 20 as shown in FIG. 9D.

Referring to FIG. 9D, when, for example, an interface card is additionally installed in Step 601D, transmission unit 11A of eNode B 10 transmits to neighboring eNode B 10 by X2 interface a reconfiguration message (X2 Reconfiguration message) that contains its own origination address in Step 602D. A response message (X2 Reconfiguration Response message) to the X2 Reconfiguration message is next transmitted from neighboring eNode B 10, following which transmission unit 11A of eNode B 10 transmits to MME 20 a reconfiguration message (S1 Reconfiguration message) that contains the origination address of neighboring eNode B 10 in Step 604D. In Step 605D, a response message (S1 Reconfiguration Response message) to the S1 Reconfiguration message is next transmitted from MME 20.

### Example 1 of a Handover Operation

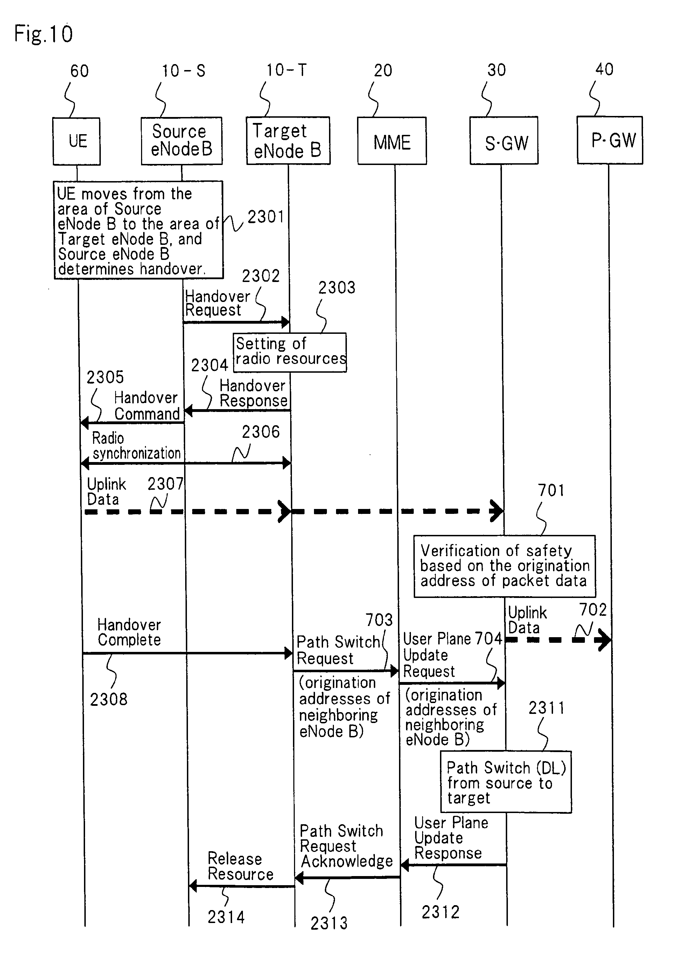

The operation of the present example is next described with reference to FIG. 10.

In FIG. 10, parts identical to FIG. 2 are given the same reference numbers.

In FIG. 10, it is assumed that the information of the origination address of Source eNode B 10-S and the origination addresses of neighboring eNode B 10 have already been saved in memory unit 34A of S-GW 30 by means of any of the above-described Examples 1-4 of the operation of transmitting the origination address of eNode B 10.

Referring to FIG. 10, uplink packet data are received in S-GW 30 from Target eNode B 10-T in Step 2307 through the same processes as in FIG. 2.

At this time, information of the origination addresses of neighboring eNode B 10 of Source eNode B 10-S that have the potential of becoming Target eNode B 10-T is also saved in memory unit 34A of S-GW 30.

As a result, control unit 33A of S-GW 30 is able to verify the safety of the received packet data without waiting for subsequent messages (Path Switch Request message and User Plane Update Request message) from Target eNode B 10-T by way of MME 20.

In other words, control unit 33A of S-GW 30 collates the origination address of received packet data with origination addresses that are saved in memory unit 34A in Step 701. In this case, an origination address that matches the origination address of the packet data that were received is present in memory unit 34A, whereby control unit 33A judges that the received packet data are safe. In this case, transmission unit 32A transfers the received packet data to P-GW 40 in Step 702.

When a Handover Complete message is next transmitted from UE 60 in Step 2308, transmission unit 11A of Target eNode B 10-T transmits to MME 20 a Path Switch Request message that contains information of the origination addresses of neighboring eNode B 10 in Step 703, and transmission unit 22A of MME 20 transmits to S-GW 30 a User Plane Update Request message that contains information of the origination addresses of neighboring eNode B 10 of Target eNode B 10-T in Step 704. In S-GW 30, the information of the origination addresses of neighboring eNode B 10 of Target eNode B 10-T is saved in memory unit 34A by control unit 33A.

Processes identical to those of FIG. 2 are subsequently carried out.

In the present example described hereinabove, S-GW 30 is able to use the information of the origination addresses of neighboring eNode B 10 of Source eNode B 10-S to verify the safety of packet data received from eNode B 10 despite the occurrence of a handover.

### Example 2 of a Handover Operation

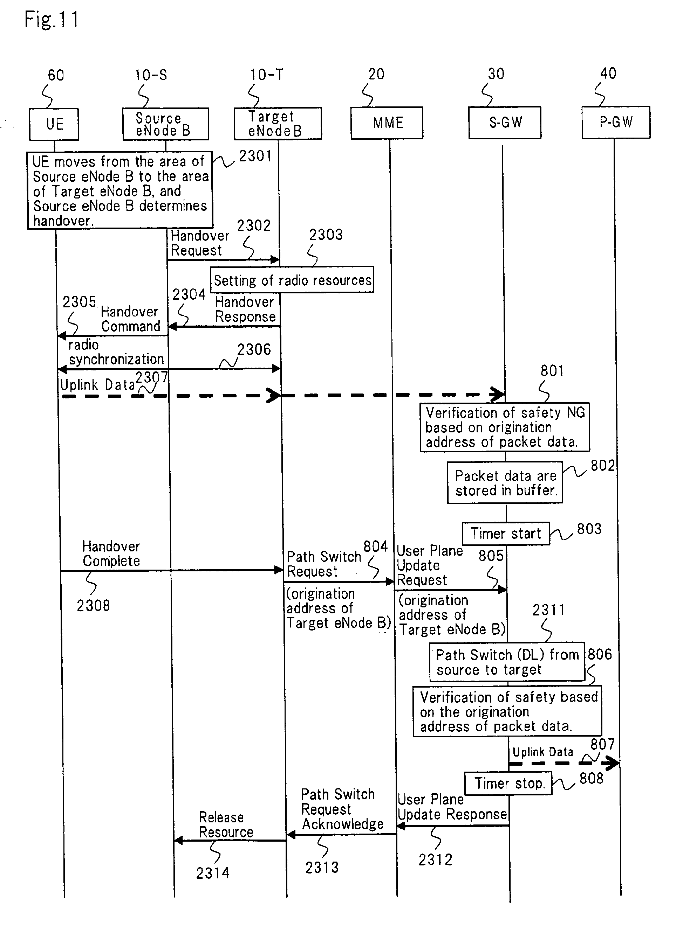

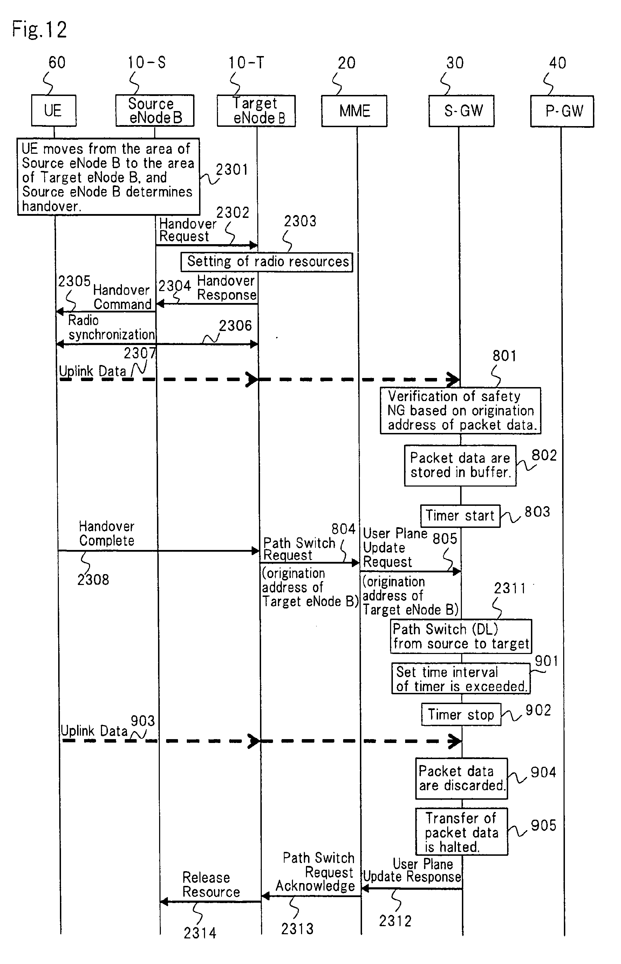

The operation of the present example is next described with reference to FIG. 11 and FIG. 12.

In FIG. 11 and FIG. 12, parts that are identical to FIG. 2 and parts common to FIG. 11 and FIG. 12 are given the same reference numbers.

In FIG. 11 and FIG. 12, it is assumed that information of the origination address of Source eNode B 10-S and the origination addresses of neighboring eNode B 10 is saved in memory unit 34A of S-GW 30 by means of any of Examples 1-4 of the operation of transmitting the origination address of eNode B 10 described hereinabove.

Referring to FIG. 11, uplink packet data are received in S-GW 30 from Target eNode B 10-T in Step 2307 through the same processes as FIG. 2.

In Step 801, control unit 33A of S-GW 30 next collates the origination address of the received packet data with origination addresses that are saved in memory unit 34A. In this case, it is assumed that an origination address that matches the origination address of the received packet data is not present in memory unit 34A, and control unit 33A therefore judges that the received packet data are dangerous.

In this case, control unit 33A of S-GW 30 begins storing the received packet data in a buffer (not shown in the figure) in Step 802, and starts time measurement by means of a timer (not shown) in Step 803.

Upon transmission of a Handover Complete message from UE 60 in Step 2308, transmission unit 11A of Target eNode B 10-T transmits to MME 20 a Path Switch Request message that contains information of the origination address of its own eNode B 10 in Step 804. Transmission unit 22A of MME 20 next transmits to S-GW 30 a User Plane Update Request message that contains information of the origination address of eNode B 10 of Target eNode B 10-T in Step 805.

Control unit 33A of S-GW 30, having carried out downlink path switching in Step 2311, next in Step 806 collates the origination address of packet data received in Step 2307 with the origination address of Target eNode B 10-T that was received in Step 805. In this case, the origination address of the received packet data matches the origination address of Target eNode B 10-T, whereby control unit 33A judges that the received packet data are safe. In this case, transmission unit 32A reads the received packet data from the buffer and transfers the data to P-GW 40 in Step 807, and control unit 33A stops the timer in Step 808.

On the other hand, if an origination address that matches the origination address of the received packet data is not reported even when the measured time of the timer surpasses a time that has been set in advance, an operation such as shown in FIG. 12 is carried out.

Specifically, referring to FIG. 12, when the measured time of the timer has surpassed a time that has been set in advance without a report of an origination address that matches the origination address of the received packet data, control unit 33A of S-GW 30 stops the timer and discards the received packet data from the buffer in Step 902.

Alternatively, even if packet data are subsequently received in Step 903, control unit 33A of S-GW 30 discards the received packet data without storing it in the buffer in Step 904 and terminates the transfer to P-GW 40 in Step 905.

Processes similar to FIG. 2 are subsequently carried out.

In the present example as described hereinabove, in the event of a handover, S-GW 30 is able to use information of the origination addresses of neighboring eNode B 10 of Source eNode B 10-S and information of the origination address of Target eNode B 10-T itself to verify the safety of packet data received from eNode B 10.

In addition, in the present example, Target eNode B 10-T individually reports origination addresses and the origination address therefore does not necessarily need to be made identical to the termination address, whereby the degree of freedom of design of the radio communication system can be raised. The reason for this effect is explained hereinbelow.

For example, making the termination address and origination address of eNode B 10 identical can also be considered to reduce manual operation by an operator. If this approach is adopted, S-GW 30 collates the origination address of packet data received from eNode B 10 with the termination address of eNode B 10 that was reported from MME 20 at the time of setting a bearer, and if the addresses do not match, is able to judge the received packet data as dangerous and discard the data.

On the other hand, however, the necessity to make the origination address and termination address identical in eNode B 10 detracts from the degree of freedom in design. In addition, because the interface card hardware that transmits packet data cannot differ from the interface card hardware that receives packet data, the load cannot be distributed autonomously at times of load concentration. In a worst case, this state may lead to a serious problem such as a system failure that results from a burst-like load concentration.

Accordingly, a configuration that does not require that the origination address and termination address of eNode B 10 be made identical as in the present example is not only able to raise the degree of freedom in design of the radio communication system but can also further increase the security of the radio communication system.

However, the termination address and origination address of eNode B 10 are also made identical in the design of a radio communication system. In this case, when MME 20 receives only one address from Target eNode B 10-T in Step 804, MME 20 is unable to judge whether this address is the origination address or not.

However, when the origination address and termination address are made identical, Target eNode B 10-T is able to include information (Indicator) indicating that the origination address and termination address are equal by adding to a Path Switch Request message.

In this way, MME 20 is able to judge whether the address received from Target eNode B 10-T is an origination address or not in Step 804, whereby the safety of packet data received from eNode B 10 can be verified.

### Example 3 of the Handover Operation

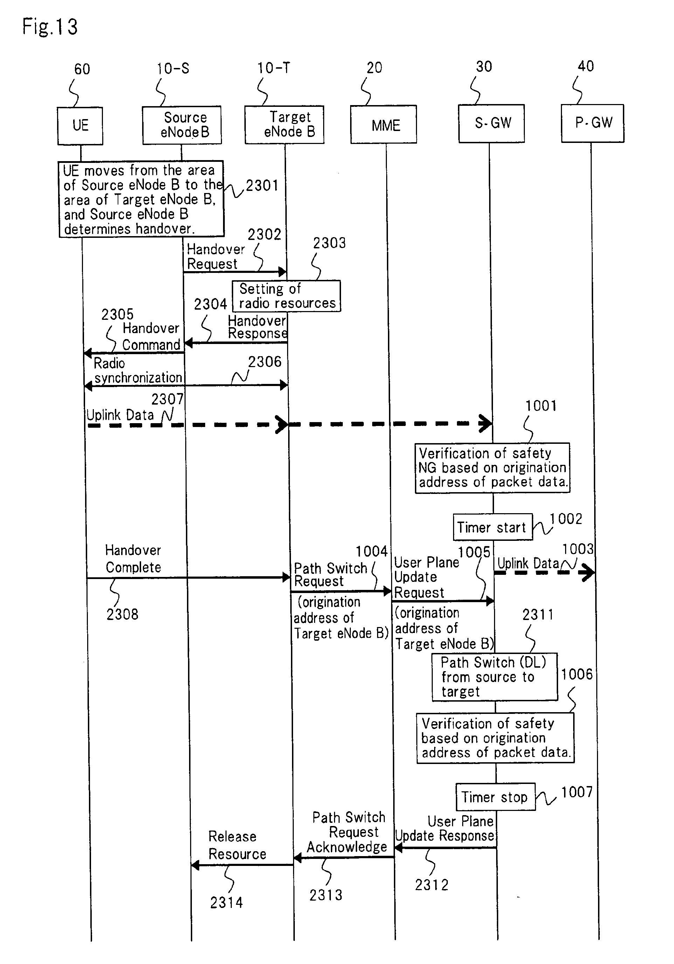

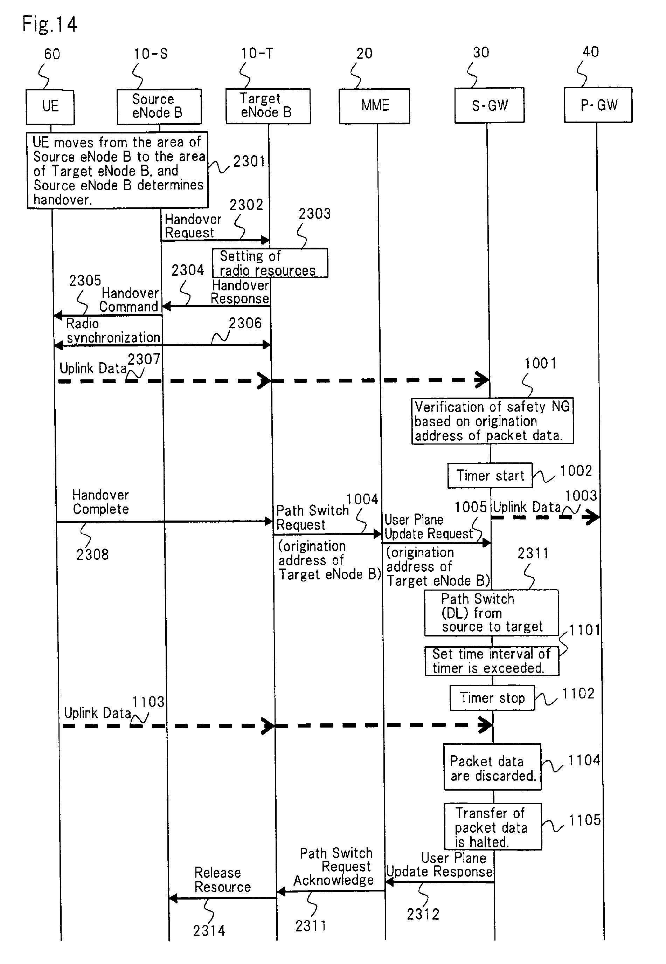

The operation of the present example is next described with reference to FIG. 13 and FIG. 14.

In FIG. 13 and FIG. 14, parts that are identical to FIG. 2 and parts that are common to FIG. 13 and FIG. 14 are given the same reference numbers.

In FIG. 13 and FIG. 14, it is assumed that information of the origination address of Source eNode B 10-S and the origination addresses of neighboring eNode B 10 has been saved in memory unit 34A of S-GW 30 by means of any of the above-described Examples 1-4 of the operation of transmitting the origination address of eNode B 10.

Referring to FIG. 13, uplink packet data are received in S-GW 30 from Target eNode B 10-T in Step 2307 through the same processes as FIG. 2.

In Step 1001, control unit 33A of S-GW 30 next collates the origination address of the received packet data with origination addresses saved in memory unit 34A. In this case, it is assumed that an origination address that matches the origination address of the received packet data is not present in memory unit 34A, and control unit 33A therefore judges that the received packet data are dangerous.

In this case, control unit 33A of S-GW 30 starts time measurement by means of a timer (not shown) in Step 1002, and transmission unit 32A continues to transfer the received packet data to P-GW 40 in Step 1003.

When a Handover Complete message is transmitted from UE 60 in Step 2308, transmission unit 11A of Target eNode B 10-T transmits to MME 20 a Path Switch Request message that contains information of the origination address of its own eNode B 10 in Step 1004. Transmission unit 22A of MME 20 next transmits to S-GW 30 a User Plane Update Request message that contains information of the origination address of eNode B 10 of Target eNode B 10-T in Step 1005.

After carrying out downlink path switching in Step 2311, control unit 33A of S-GW 30 in Step 1006 next collates the origination address of packet data that were received in Step 2307 with the origination address of Target eNode B 10-T that was received in Step 1005. In this case, the origination address of the received packet data matches the origination address of Target eNode B 10-T, and control unit 33A therefore judges that the received packet data are safe and halts the timer in Step 1007.

On the other hand, if an origination address that matches the origination address of the received packet data is not reported even though the measurement time of the timer surpasses a time that has been set in advance, an operation as shown in FIG. 14 is carried out.

Referring to FIG. 14, if the measurement time of the timer surpasses a time that has been set in advance without a report of an origination address that matches the origination address of the received packet data, control unit 33A of S-GW 30 stops the timer in Step 1102.

Even if packet data are subsequently received in Step 1103, control unit 33A of S-GW 30 discards the received packet data in Step 1104 and halts the transfer to P-GW 40 in Step 1105.

The same processes as those of FIG. 2 are subsequently carried out.

In the present example as described above, when a handover occurs, S-GW 30 is able to use the information of the origination address of neighboring eNode B 10 of Source eNode B 10-S and the information of the origination address of Target eNode B 10-T itself to verify the safety of packet data that are received from eNode B 10.

In the present example, moreover, the origination address and termination address of eNode B 10 need not be made identical, whereby both the degree of freedom of design of the radio communication system can be raised and the security of the radio communication system can be augmented.

However, when the origination address and termination address are made identical, Target eNode B 10-T is able to include information indicating that the origination address and termination address are identical by adding to a Path Switch Request message in Step 1104.

### Second Exemplary Embodiment

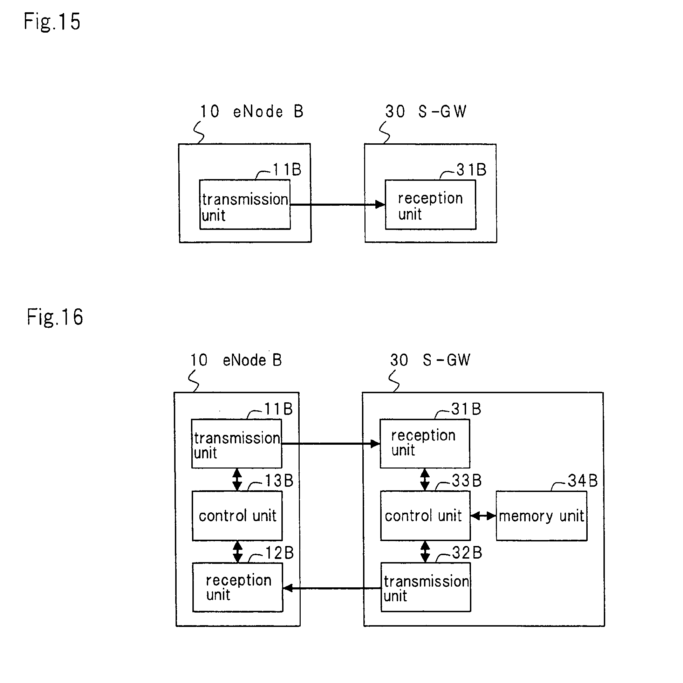

The schematic configuration of the present exemplary embodiment is first described with reference to FIG. 15.

Referring to FIG. 15, eNode B 10 according to the present exemplary embodiment includes transmission unit 11B that directly transmits to S-GW 30 packet data that contain in a header information of the origination addresses of neighboring eNode B 10. The information of the origination addresses of neighboring eNode B 10 can conceivably be set in eNode B 10 by the manual operation of an operator in advance, but the present exemplary embodiment is not limited to this form.

In addition, S-GW 30 according to the present exemplary embodiment includes reception unit 31 B that receives from eNode B 10 packet data that include in a header information of the origination address of neighboring eNode B 10.

The detailed configuration of the present exemplary embodiment is next described with reference to FIG. 16.

Referring to FIG. 16, eNode B 10 according to the present exemplary embodiment includes reception unit 12A and control unit 13A in addition to the above-described transmission unit 11A.

Transmission unit 11 B is a component that carries out processes of transmitting messages and packet data to S-GW 30, an example being a process of transmitting to S-GW 30 packet data that contain in a header information of the origination addresses of neighboring eNode B 10 as described hereinabove.

Reception unit 12B carries out processes of receiving messages and packet data from S-GW 30.

Control unit 13B carries out processes such as generating messages that contain information that is to be transmitted to S-GW 30 and packet data that contain this information in a header.

The transmission and reception of messages and packet data by transmission unit 11 B, reception unit 12B, and control unit 13B are assumed to be carried out with UE 60, other eNode B 10, and MME 20.

S-GW 30 according to the present exemplary embodiment includes transmission unit 32B, control unit 33B and memory unit 34B in addition to the above-described reception unit 31B.

Reception unit 31 B is a component that carries out processes of receiving messages and packet data from eNode B 10, an example being the process of receiving from eNode B 10 packet data that contain in a header information of the origination addresses of neighboring eNode B 10 as described hereinabove.

Transmission unit 32B carries out processes of transmitting messages and packet data to eNode B 10.

Control unit 33B carries out processes such as a process of generating messages that contain information that is to be transmitted to eNode B 10, a process of saving in memory unit 34B information of the origination addresses of neighboring eNode B 10, and a process of collating the origination address of packet data that are received from eNode B 10 with origination addresses that are saved in memory unit 34B to verify the safety of received packet data.

The transmission and reception of messages and packet data by means of transmission unit 32B, reception unit 31B, and control unit 33B are assumed to be carried out with MME 20 and P-GW 40.

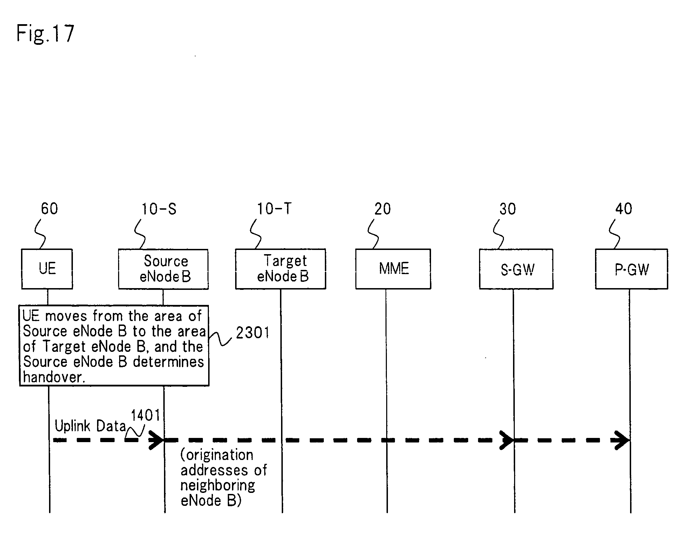

A handover operation of the present exemplary embodiment is next described with reference to FIG. 17.

Because approximately the same handover operation is carried out in FIG. 17 as in FIG. 2, only characteristic parts of the present exemplary embodiment are shown and other parts are omitted.

In FIG. 17, it is assumed that the origination address of Source eNode B 10-S has already been reported to S-GW 30 by means of any of Examples 1-4 of the operation of transmitting the origination address of eNode B 10 in the above-described first exemplary embodiment and has already been saved in memory unit 34 of S-GW 30.

Referring to FIG. 17, UE 60 moves from the area of Source eNode B 10-S to the area of Target eNode B 10-T, whereby control unit 13B of Source eNode B 10-S has determined a handover in Step 2301.

In Step 1401, control unit 13B of Source eNode B 10-S thereupon includes the origination addresses of neighboring eNode B 10 in the header of the packet data that were received from UE 60 and transmission unit 11B transmits the packet data to S-GW 30.

In eNode B 10, GTP (GPRS Tunneling Protocol, where GPRS is General Packet Radio Service) is typically used to transfer the packet data.

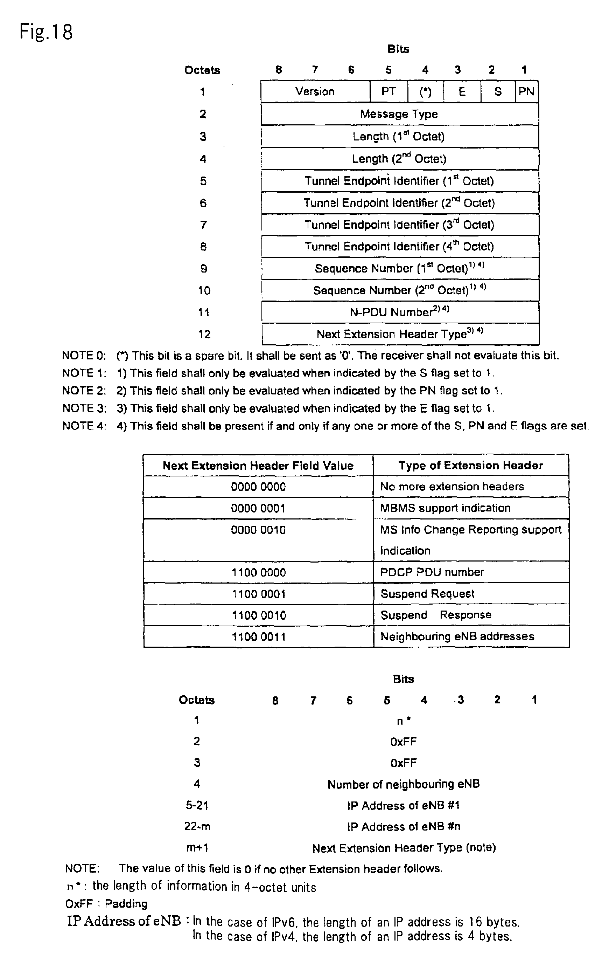

As a result, control unit 13B of Source eNode B 10-S includes the origination addresses of neighboring eNode B 10 in the GTP header as shown in FIG. 18 (3GPP TS 29.060, V8.2.0 - 6)

More specifically, a portion noting the Type of Extension Header is included in the GTP header as shown in the upper table of FIG. 18. As a result, origination addresses of neighboring eNode B 10 (Neighboring eNB addresses) that are defined as shown in the central table of FIG. 18 are noted in this portion. The notation content at this time is as shown in the lower table of FIG. 18.

In S-GW 30, information of the origination addresses of neighboring eNode B 10 of Source eNode B 10-S is saved in memory unit 34B by control unit 33B.

In the present exemplary embodiment as described hereinabove, S-GW 30 is able to acquire from Source eNode B 10-S, at the time of deciding handover, the origination addresses of neighboring eNode B 10 that have a potential of becoming Target eNode B 10-T. The information of the origination addresses of Source eNode B 10-S can be acquired from Source eNode B 10-S at the time of an attach.

Accordingly, S-GW 30 is able to verify the safety of packet data that have been received from eNode B 10 even in the event of a handover and is thus able to ensure the security of the radio communication system.

In the present exemplary embodiment, information of the origination address of eNode B 10 is transmitted to S-GW 30 from eNode B 10 by way of MME 20 or directly from eNode B 10, whereby manual operation by an operator can be reduced.

### Third Exemplary Embodiment

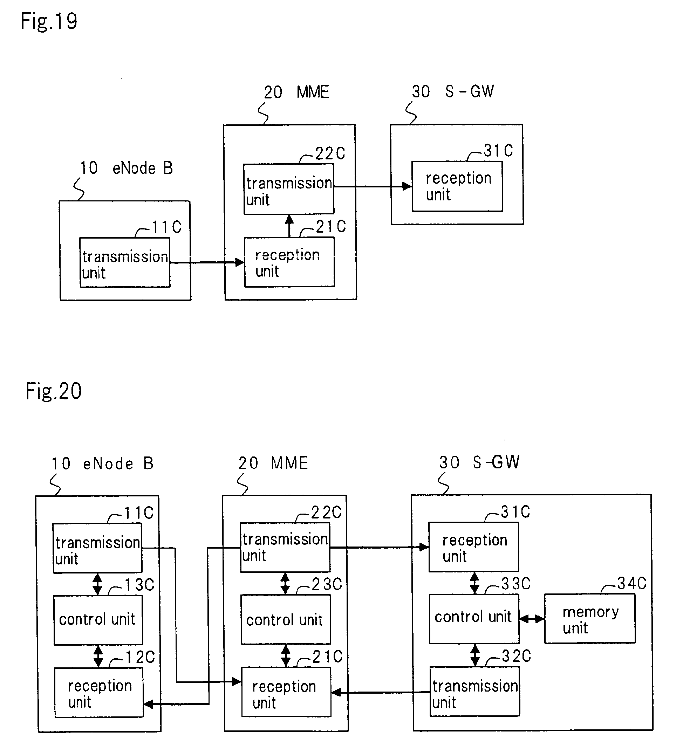

The schematic configuration of the present exemplary embodiment is next described with reference to FIG. 19.

Referring to FIG. 19, eNode B 10 according to the present exemplary embodiment includes transmission unit 11C that transmits to MME 20 a message containing information of the origination address of Target eNode B 10-T when UE 60 performs handover that takes its own eNode B 10 as Source eNode B 10-S. The information of Target eNode B 10-T is received from Target eNode B 10-T, as will be described hereinbelow.

MME 20 according to the present exemplary embodiment includes reception unit 21C that receives messages containing information of the origination address of Target eNode B 10-T from eNode B 10 and transmission unit 22C that transmits to S-GW 30 messages containing information of the origination address of Target eNode B 10-T.

S-GW 30 according to the present exemplary embodiment includes reception unit 31C that receives from MME 20 messages containing information of the origination address of Target eNode B 10-T.

The detailed configuration of the present exemplary embodiment is next described with reference to FIG. 20.

Referring to FIG. 20, eNode B 10 according to the present exemplary embodiment includes reception unit 12C and control unit 13C in addition to the above-described transmission unit 11C.

Transmission unit 11C is a component that carries out the processes of transmitting messages and packet data to MME 20, one example being a process of transmitting to MME 20 a message containing information of the origination address of Target eNode B 10-T as described hereinabove.

Reception unit 12C carries out processes of receiving messages and packet data from MME 20.

Control unit 13C carries out processes such as generating messages that contain information that is to be transmitted to MME 20.

The transmission and reception of messages and packet data by means of transmission unit 11C, reception unit 12C, and control unit 13C are assumed to be carried out with UE 60, other eNode B 10, and S-GW 30.

MME 20 according to the present exemplary embodiment includes control unit 23C in addition to the above-described reception unit 21C and transmission unit 22C.

Reception unit 21C is a component that carries out processes of receiving messages and packet data from eNode B 10 and S-GW 30, one example being the process of receiving messages that contain information of the origination address of Target eNode B 10-T from eNode B 10, as described hereinabove.

Transmission unit 22C is a component that carries out processes of transmitting messages and packet data to eNode B 10 and S-GW 30, one example being the process of transmitting to S-GW 30 messages that contain information of the origination address of Target eNode B 10-T, as described hereinabove.

Control unit 23C carries out processes such as generating messages that contain information that is to be transmitted to eNode B 10 and S-GW 30.

In addition, S-GW 30 according to the present exemplary embodiment includes transmission unit 32C, control unit 33C, and memory unit 34C, in addition to the above-described reception unit 31C.

Reception unit 31C is a component that carries out processes of receiving messages and packet data from MME 20, one example being a process of receiving messages that contain information of the origination address of Target eNode B 10-T from MME 20, as described hereinabove.

Transmission unit 32C carries out processes of transmitting messages and packet data to MME 20.

Control unit 33C carries out a process of generating messages that contain information that is to be transmitted to MME 20, a process of saving in memory unit 34C the information of the origination addresses of neighboring eNode B 10, and a process verifying the safety of received packet data by collating the origination address of packet data received from MME 20 with origination addresses saved in memory unit 34C.

The transmission and reception of messages and packet data by means of transmission unit 32C, reception unit 31C and control unit 33C are assumed to be carried out with P-GW 40.

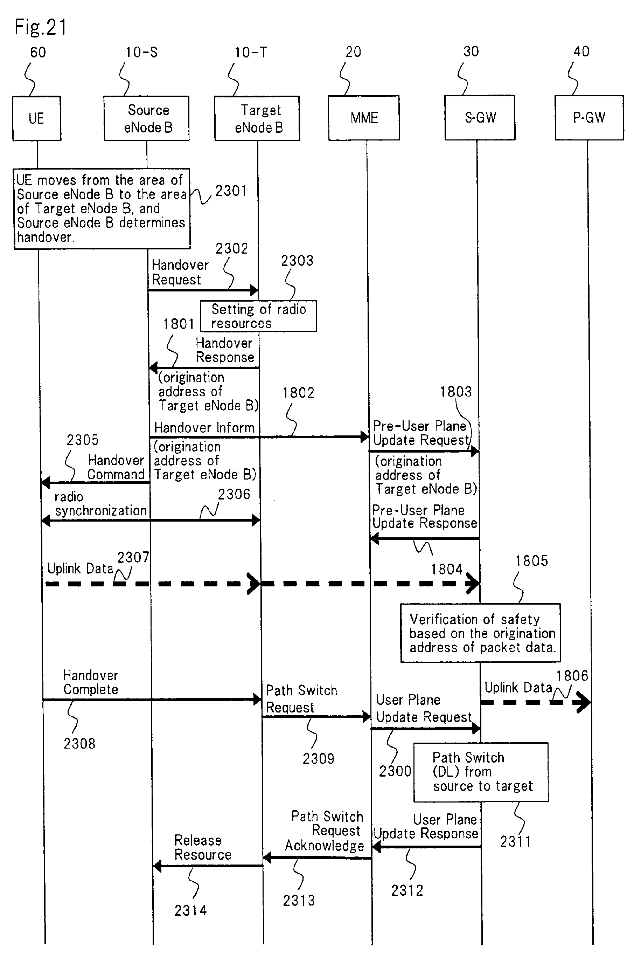

The handover operation of the present exemplary embodiment is next described with reference to FIG. 21.

In FIG. 21, parts identical to FIG. 2 are given the same reference numbers.

In FIG. 21, it is here assumed that the origination address of Source eNode B 10-S has already been reported to S-GW 30 and already saved in memory unit 34C of S-GW 30 by any of Examples 1-4 of the operation of transmitting the origination address of eNode B 10 in the above-described first exemplary embodiment.

Referring to FIG. 21, after setting radio resources in Step 2303 through the same processes as FIG. 2, transmission unit 11C of Target eNode B 10-T in Step 1801 transmits to Source eNode B 10-S a response message (Handover Response message) to the Handover Request message, in which the response message contains information of the origination address of its own Target eNode B 10-T.

In Step 1802, transmission unit 11C of Source eNode B 10-S transmits to MME 20 a message (Handover Inform message) indicating that handover has occurred and including information of the origination address of Target eNode B 10-T. In Step 1803, transmission unit 22C of MME 20 transmits to S-GW 30 a message (Pre-User Plane Update Request message) that contains information of the origination address of Target eNode B 10-T. In Step 1804, transmission unit 32C of S-GW 30 next transmits to MME 20 a response message (Pre-User Plane Update Response message) to the Pre-User Plane Update Request message. In S-GW 30, information of the origination address of Target eNode B 10-T is saved in memory unit 34C by means of control unit 33C.

As a result, control unit 33C of S-GW 30 is able to verify the safety of received packet data without waiting for a subsequent messages (Path Switch Request message and User Plane Update Request message) from Target eNode B 10-T by way of MME 20.

In other words, control unit 33C of S-GW 30 in Step 1805 collates the origination address of received packet data with the origination addresses saved in memory unit 34C. In this case, an origination address that matches the origination address of the received packet data is present in memory unit 34C, whereby control unit 33C judges that the received packet data are safe. In this case, transmission unit 32C transfers the received packet data to P-GW 40 in Step 1806.

The same processes as FIG. 2 are subsequently carried out. The information of the origination address of Source eNode B 10-S can also be acquired from Source eNode B 10-S at the time of an attach by means of any of Examples 1-4 of the operation of transmitting the origination address of eNode B 10 in the above-described first exemplary embodiment.

In the present exemplary embodiment as described hereinabove, S-GW 30 is able to acquire the origination address of Target eNode B 10-T from Source eNode B 10-S at the time of a decision of handover.

Accordingly, S-GW 30 is able to verify the safety of packet data received from eNode B 10 despite the occurrence of handover, and is able to ensure the security of the radio communication system.

In addition, before UE 60 starts the transmission of uplink data (packet data) by way of eNode B 10 (for example, before a Handover Command message to UE 60), Source eNode B 10-S transmits information of the origination address of Target eNode B 10-T to S-GW 30 by way of MME 20, whereby S-GW 30 is able to verify the safety from the initial packet data that are received from Target eNode B 10-T. In the present exemplary embodiment, the information of the origination address of eNode B 10 is transmitted from eNode B 10 to S-GW 30, and manual operation by an operator can therefore be reduced.

In the present exemplary embodiment, moreover, Source eNode B 10-S transmits information of the origination address of Target eNode B 10-T rather than the origination addresses of neighboring eNode B 10, whereby the amount of information that is transmitted can be reduced compared to a case of transmitting information of the origination addresses of neighboring eNode B 10.

### Fourth Exemplary Embodiment

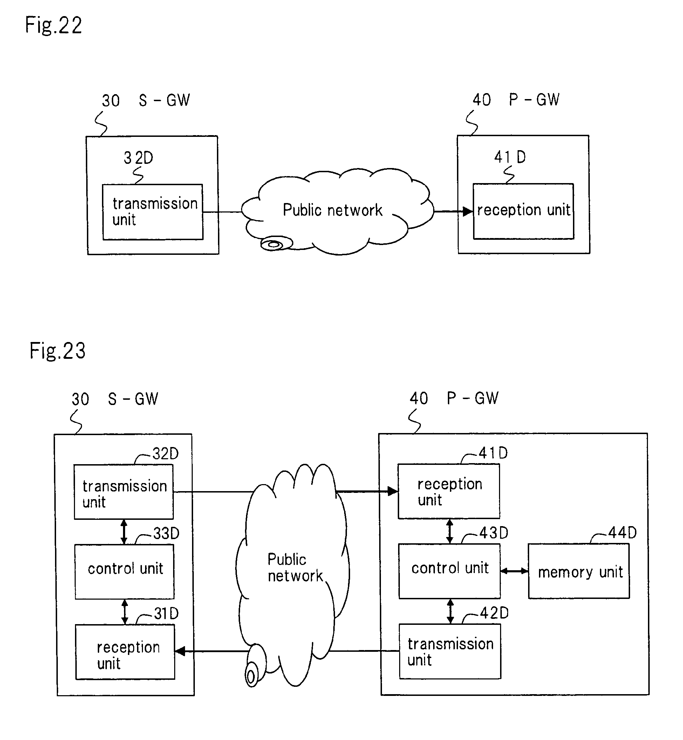

The schematic configuration of the present exemplary embodiment is first described with reference to FIG. 22.

Referring to FIG. 22, S-GW 30 according to the present exemplary embodiment includes transmission unit 32D that, in a state in which UE 60 is roaming in an outside network and carries out handover that accompanies a change to its own S-GW 30, transmits a message containing information of the origination address of its own S-GW 30 to P-GW 40 by way of a public network. In addition, P-GW 40 according to the present exemplary embodiment includes reception unit 41D that receives, from Target S-GW30-T that follows the change by handover, information of the origination address of Target eNode B 10-T by way of a public network.

The detailed configuration of the present exemplary embodiment is next described with reference to FIG. 23.

Referring to FIG. 23, S-GW 30 according to the present exemplary embodiment includes reception unit 31D and control unit 3 3D, in addition to the above-described transmission unit 32D.

Transmission unit 32D is a component that carries out processes of transmitting messages and packet data to P-GW 40, one example being the process of transmitting to P-GW a message containing information of the origination address of its own S-GW 30 as described hereinabove.

Reception unit 31D carries out processes of receiving messages and packet data from P-GW 40.

Control unit 33D carries out processes such as generating messages containing information that is to be transmitted to P-GW 40.

The transmission and reception of messages and packet data by means of transmission unit 32D, reception unit 31D, and control unit 33D are assumed to be carried out with MME 20 and eNode B 10. ,

P-GW 40 according to the present exemplary embodiment includes transmission unit 42D, control unit 43D, and memory unit 44D, in addition to the above-described reception unit 41D.

Reception unit 41D is a component that carries out processes of receiving messages and packet data from S-GW 30, one example being a process of receiving messages that contain information of the origination address of Target S-GW 30-T from Target S-GW 30-T as described hereinabove.

Transmission unit 42D carries out processes of transmitting messages and packet data to S-GW 30.

Control unit 43D carries out a process of generating messages containing information that is to be transmitted to S-GW 30, a process of saving in memory unit 34D information of the origination address of Target S-GW 30-T, and a process of verifying the safety of received packet data by collating the origination address of packet data received from Target S-GW 30-T with origination addresses saved in memory unit 34D.

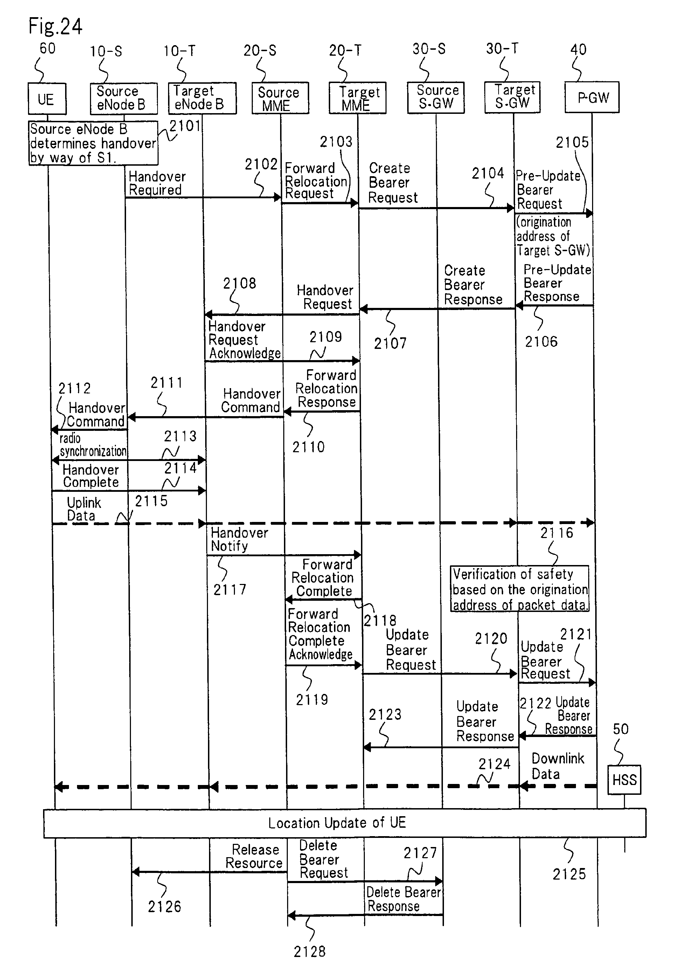

The operations of the present exemplary embodiment are next described with reference to FIG. 24.

Referring to FIG. 24, it is assumed that Source eNode B 10-S has determined in Step 2101 a handover that accompanies change from Source S-GW 30-S to Target S-GW 30-T due to movement of UE 60 that is roaming in an outside network from the area of Source eNode B 10-S to the area of Target eNode B 10-T.

In Step 2102, Source eNode B 10-S thereupon transmits to Source MME 20 a message (Handover Required message) to prepare for the handover, and Source MME 20 in Step 2103 transmits to Target MME 20-T a message (Forward Relocation Request message) to send the Context of UE 60 and the address of P-GW 40.

In Step 2104, Target MME 20-T next transmits to Target S-GW 30-T a message (Create Bearer Request message) to request creation of a bearer, and Target S-GW 30-T in Step 2105 transmits to P-GW 40 a message (Pre-Update Bearer Request message) containing information of the origination address of Target S-GW 30-T. In P-GW 40, the information of the origination address of Target S-GW 30-T is saved in memory unit 44D by control unit 43D.

In Step 2106, transmission unit 42D of P-GW 40 transmits to Target S-GW 30-T a response message (Pre-Update Bearer Response message) to the Pre-Update Bearer Request message, and transmission unit 32D of Target S-GW 30-T transmits to Target MME 20-T a response message (Create Bearer Response message) to the Create Bearer Request message in Step 2107.

In Step 2108, Target MME 20-T next transmits to Target eNode B 10-T a message (Handover Request message) requesting handover, and Target eNode B 10-T transmits to Target MME 20-T a response message (Handover Request Acknowledgement message) to the handover request in Step 2109.

In Step 2110, Target MME 20-T next transmits to Source MME 20-S a response message (Forward Relocation Response message) to the Forward Relocation Request message, and Source MME 20-S transmits to UE 60 by way of Source eNode B 10-S a message (Handover Command message) commanding handover in Steps 2111 and 2112.

After radio synchronization has been established between UE 60 and Target eNode B 10-T in Step 2113, UE 60 transmits to Target eNode B 10-T a message (Handover Complete message) indicating completion of handover in Step 2114.

When uplink packet data from Target S-GW 30-T are received in P-GW 40 in Step 2115, control unit 43D of P-GW 40 then collates the origination address of the received packet data with the origination addresses saved in memory unit 44D in Step 2116. In this case, an origination address of Target S-GW 30-T that matches the origination address of the received packet data is present in memory unit 44D, and control unit 43D therefore judges that the received packet data are safe. In this case, transmission unit 42D transfers the received packet data within its own network.

In Step 2117, Target eNode B 10-T next transmits to Target MME 20-T a message (Handover Notify message) reporting that UE 60 is connected to Target eNode B 10-T, in Step 2118 Target MME 20-T transmits to Source MME 20-S a message (Forward Relocation Complete message) reporting that UE 60 has performed handover, and in Step 2119 Source MME 20-S transmits to Target MME 20-T a response message (Forward Relocation Complete Acknowledgement message) to the Forward Relocation Complete message.

In Steps 2121 and 2122, Target MME 20-T next transmits to P-GW 40 by way of Target S-GW 30-T a message (Update Bearer Request message) requesting updating of the bearer, and in Steps 2122 and 2123, transmission unit 42D of P-GW 40 transmits a response message (Update Bearer Response message) to the Update Bearer Request message to Target MME 20-T by way of Target S-GW 30-T. Transmission unit 42D of P-GW 40 then transmits to Target S-GW 30-T downlink packet data in Step 2124.

When the location of UE 60 is subsequently updated using user information that is saved in HSS 50 in Step 2125, Source MME 20-S in Step 2126 transmits to Source eNode B 10-S a message (Release Resource message) indicating the release of resources. In Step 2127, Source MME 20-S further transmits to Source S-GW 30-S a message (Delete Bearer Request message) requesting the deletion of the bearer, and transmission unit 32D of Source S-GW 30-S transmits to Source MME 20-S a response message (Delete Bearer Response message) to the Delete Bearer Request message in Step 2128.

Although a case in which UE 60 is roaming in an outside network has been described in the foregoing explanation, the operations shown in FIG. 24 of the present exemplary embodiment are not limited to a case in which UE 60 is roaming in an outside network.

In the present exemplary embodiment as described above, when a handover is performed that accompanies change from Source S-GW 30-S to Target S-GW 30-T, P-GW 40 is able to acquire information of the origination address of Target S-GW 30-T.

Accordingly, P-GW 40 is able to verify the safety of packet data that are received from S-GW 30 despite the occurrence of handover that accompanies change of S-GW 30, and is therefore able to ensure the security of the radio communication system. In particular, when UE 60 is roaming in an outside network, P-GW 40 receives packet data from S-GW 30 by way of a public network, and the possibility of threat to the security of radio communication system is therefore high. In this type of roaming environment, verification of the safety of packet data by means of the present exemplary embodiment is even more effective.

In addition, Source S-GW 30-S transmits information of the origination address of Target S-GW 30-T to P-GW 40 by way of MME 20 before UE 60 begins transmission of uplink data (packet data) by way of Target eNode B 10-T (for example, before a Handover Command message to UE 60), whereby P-GW 40 is able to verify the safety from the initial packet data that are received from Target S-GW 30-T.

Because there is no need to set the origination address of S-GW 30 in P-GW 40 by the manual operation of an operator in the present exemplary embodiment, manual operation by an operator can be reduced.

Although the present invention has been described hereinabove with reference to exemplary embodiments, the present invention is not limited to the above-described exemplary embodiments. The configuration and details of the present invention are open to various modifications within the scope of the present invention that will be understood by one of ordinary skill in the art.

For example, an LTE radio communication system has been described by way of example in the foregoing exemplary embodiments, but the present invention is not limited to an LTE radio communication system and can be applied to other radio communication systems equipped with a base station, a mobile management node, and a gateway.

In the foregoing exemplary embodiments, a radio communication system in which a mobile management node and a gateway are separated was described by way of example, but the present invention can also be applied to a radio communication system in which a mobile management node and gateway are unified.

The present application claims priority based on JP-A-2008-021303 for which application was submitted on January 31, 2008 and incorporates all of the disclosures of that application.

## Claims

1. A radio communication system comprising a base station, a mobility management node, and a gateway, wherein:
said base station transmits information of origination addresses of neighboring base stations of said base station to said mobility management node;
said mobility management node receives information of the origination addresses of said neighboring base stations from said base station, and transmits information of the origination addresses of said neighboring base stations to said gateway; and
said gateway receives information of origination addresses of said neighboring base stations from said mobility management node.

2. The radio communication system as set forth in claim 1, wherein said base station, at times of attach to said base station by a radio communication apparatus, transmits to said mobility management node information of origination addresses of said neighboring base stations.

3. The radio communication system as set forth in claim 1, wherein said base station, at times of call origination of a radio communication apparatus, transmits to said mobility management node information of origination addresses of said neighboring base stations.

4. The radio communication system as set forth in claim 1, wherein said base station, at times of location updating to said base station by a radio communication apparatus, transmits to said mobility management node information of origination addresses of said neighboring base stations.

5. The radio communication system as set forth in claim 1, wherein said base station, at times of startup of said base station, transmits to said mobility management node information of origination addresses of said neighboring base stations.

6. The radio communication system as set forth in any one of claims 1 to 5, wherein said gateway:
saves information of origination addresses of said neighboring base stations; and
collates the origination address of packet data that was received from a movement destination base station with which a radio communication apparatus has performed handover with said saved origination addresses.

7. The radio communication system as set forth in claim 6, wherein said base station, when said base station becomes said movement destination base station, transmits to said mobility management node information of the origination addresses of neighboring base stations of said base station.

8. The radio communication system as set forth in claim 6, wherein:
said base station, when said base station becomes said movement destination base station, transmits to said mobility management node information of the origination address of said base station; and
said gateway, when an origination address that matches the origination address of packet data received from said movement destination base station is not stored, collates the origination address of said received packet data with the origination address received from said movement destination base station.

9. The radio communication system as set forth in claim 7, wherein said base station, when said base station becomes said movement destination base station, transmits to said mobility management node information indicating that the origination address and termination address of said base station are identical.

10. The radio communication system as set forth in claim 8 or claim 9, wherein said gateway:
after detection that an origination address that matches the origination address of packet data received from said movement destination base station is not saved, saves in a buffer packet data received from said movement destination base station within a fixed interval; and
when the origination address received from said movement destination base station matches an origination address of said received packet data within said fixed interval, transfers to a host node packet data that were saved in said buffer.

11. The radio communication system as set forth in claim 8 or claim 9, wherein said gateway after detection that an origination address that matches the origination address of packet data received from said movement destination base station is not saved, transfers to a host node the packet data that were received from said movement destination base station within a fixed interval.

12. A radio communication system comprising a base station and a gateway; wherein:
said base station transmits to said gateway packet data that contain in a header information of the origination addresses of neighboring base stations of said base station; and
said gateway receives packet data that contain in a header information of the origination addresses of said neighboring base stations from said base station.

13. The radio communication system as set forth in claim 12, wherein said base station, after deciding that a radio communication apparatus is to perform handover from said base station, transmits to said gateway packet data that contain in a header information of the origination addresses of said neighboring base stations.

14. The radio communication system as set forth in claim 12 or claim 13, wherein said gateway:
saves information of origination addresses of said neighboring base stations; and
collates the origination address of packet data that have been received from a movement destination base station with which a radio communication apparatus has performed handover with said saved origination addresses.

15. A radio communication system comprising a base station, a mobility management node, and a gateway; wherein:
said base station transmits to said mobility management node information of the origination address of a movement destination base station to which a radio communication apparatus has performed handover from said base station;
said mobility management node receives information of the origination address of said movement destination base station from said base station, and transmits to said gateway information of the origination address of said movement destination base station; and
said gateway receives information of the origination address of said movement destination base station from said mobility management node.

16. The radio communication system as set forth in claim 15, wherein said base station:
when said base station becomes said movement destination base station, in response to a handover request from the movement origin base station, transmits to said movement origin base station information of the origination address of said base station; and
when said base station becomes said movement origin base station, transmits to said mobility management node information of the origination address of said movement destination base station that was received from said movement destination base station.

17. The radio communication system as set forth in claim 15 or claim 16, wherein said gateway:
saves information of the origination address of said movement destination base station; and
collates the origination address of packet data received from said movement destination base station with said saved origination addresses.

18. The radio communication system as set forth in any one of claims 15 to 17, wherein said base station, before transmitting to said radio communication apparatus a message commanding handover, transmits origination address information of said gateway to said gateway by way of said mobility management node.

19. A radio communication system comprising a base station, a mobility management node, a gateway that is connected to said base station, and a host gateway that is connected to said gateway; wherein:
said gateway, after determination that a radio communication apparatus is to perform handover that accompanies change to said gateway, transmits to said host gateway information of the origination address of said gateway; and
said host gateway receives information of the origination address of said gateway from said gateway.

20. The radio communication system as set forth in claim 19, wherein said gateway, in response to a bearer creation request from said mobility management node, transmits to said host gateway information of the origination address of said gateway.

21. The radio communication system as set forth in claim 19 or claim 20, wherein said host gateway:
saves information of the origination address of said gateway; and
collates the origination address of packet data received from said gateway with said saved origination addresses.

22. The radio communication system as set forth in any one of claims 19 to 21, wherein said gateway, before said base station transmits a message commanding handover to said radio communication apparatus, transmits to said host gateway information of the origination address of said gateway.

23. A base station comprising a transmission unit that transmits to a gateway by way of a mobility management node information of the origination addresses of neighboring base stations of said base station.

24. The base station as set forth in claim 23, wherein said transmission unit transmits to said mobility management node information of origination addresses of said neighboring base stations at the time of an attach of a radio communication apparatus to said base station.

25. The base station as set forth in claim 23, wherein said transmission unit transmits to said mobility management node information of origination addresses of said neighboring base station at the time of call origination of a radio communication apparatus.

26. The base station as set forth in claim 23, wherein said transmission unit transmits to said mobility management node information of origination addresses of said neighboring base stations at the time of location updating of a radio communication apparatus to said base station.

27. The base station as set forth in claim 23, wherein said transmission unit transmits to said mobility management node information of the origination addresses of said neighboring base stations at the time of startup of said base station.

28. The base station as set forth in any one of claims 23 to 27, wherein said transmission unit transmits to said mobility management node information of the origination addresses of said neighboring base stations when a radio communication apparatus performs handover to said base station.

29. The base station as set forth in any one of claims 23 to 27, wherein said transmission unit transmits to said mobility management node information of the origination address of said base station when a radio communication apparatus performs handover to said base station.

30. The base station as set forth in claim 29, wherein said transmission unit transmits to said mobility management node information indicating that the origination address and termination address of said base station are identical when a radio communication apparatus performs handover to said base station.

31. A base station comprising a transmission unit that transmits to a gateway packet data that contain in a header information of the origination addresses of neighboring base stations of said base station.

32. The base station as set forth in claim 31, wherein said transmission unit, after decision that a radio communication apparatus is to perform handover from said base station, transmits to said gateway packet data that contain in a header information of the origination addresses of said neighboring base stations.

33. A base station comprising a transmission unit that transmits to a gateway by way of a mobility management node information of the origination address of a movement destination base station to which a radio communication apparatus has performed handover from said base station.

34. The base station as set forth in claim 33, wherein said transmission unit:
when said base station becomes said movement destination base station, in response to a handover request from the movement origin base station, transmits to said movement origin base station information of the origination address of said base station; and
when said base station becomes said movement origin base station, transmits to said mobility management node information of the origination address of said movement destination base station that was received from said movement destination base station.

35. The base station as set forth in claim 33 or claim 34, wherein said transmission unit, before transmitting a message commanding handover to said radio communication apparatus, transmits information of the origination address of said gateway to said gateway by way of said mobility management node.

36. A gateway comprising a reception unit that receives, from a base station by way of a mobility management node, information of the origination addresses of neighboring base stations of said base station.

37. The gateway as set forth in claim 36, further comprising:
a memory unit that saves information of origination addresses of said neighboring base stations; and
a control unit that collates the origination address of packet data received from a movement destination base station to which a radio communication apparatus has performed handover with origination addresses that are saved in said memory unit.

38. The gateway as set forth in claim 37, wherein:
said reception unit receives, from said movement destination base station, information of the origination address of the movement destination base station; and
said control unit, when an origination address that matches the origination address of packet data received from said movement destination base station is not present in said memory unit, collates the origination address of said received packet data with the origination address received from said movement destination base station.

39. The gateway as set forth in claim 38, wherein:
said control unit, after detecting that an origination address that matches the origination address of packet data received from said movement destination base station, saves in a buffer packet data received from said movement destination base station within a fixed interval; and
said gateway further includes a transmission unit that, when the origination address received from said movement destination base station matches the origination address of said received packet data within said fixed interval, transmits to a host node packet data that are saved in said buffer at that time.

40. The gateway as set forth in claim 38, further comprising a transmission unit that, after determining that an origination address that matches the origination address of packet data received from said movement destination base station is not present in said memory unit, transmits to a host node packet data that were received from said movement destination base station within a fixed interval.

41. A gateway comprising a reception unit that receives from a base station packet data that contain in a header information of the origination addresses of neighboring base stations of said base station.

42. The gateway as set forth in claim 41, further comprising:
a memory unit that saves information of origination addresses of said neighboring base stations; and
a control unit that collates the origination address of packet data received from a movement destination base station with which a radio communication apparatus has performed handover with origination addresses that are saved in said memory unit.

43. A gateway comprising a reception unit that receives, from a base station by way of a mobility management node, information of the origination address of a movement destination base station with which a radio communication apparatus has performed handover from said base station.

44. The gateway as set forth in claim 43, further comprising:
a memory unit that saves information of the origination address of said movement destination base station; and
a control unit that collates the origination address of packet data received from said movement destination base station with origination addresses that are saved in said memory unit.

45. A gateway that is connected between a base station and a host gateway, comprising:
a transmission unit that, after a decision that a radio communication apparatus is to perform handover that accompanies change to said gateway, transmits to said host gateway information of the origination address of said gateway.

46. The gateway as set forth in claim 45, wherein said transmission unit transmits to said host gateway information of the origination address of said gateway in response to a bearer creation request from said mobility management node.

47. The gateway as set forth in claim 45 or claim 46, wherein said transmission unit, before said base station transmits a message commanding handover to said radio communication apparatus, transmits to said host gateway information of the origination address of said gateway.

48. A host gateway connected to a gateway that is connected to a base station, comprising a reception unit that, after a decision that a radio communication apparatus is to perform handover that accompanies a change to said gateway, receives from said gateway information of the origination address of said gateway.

49. The host gateway as set forth in claim 48, further comprising:
a memory unit that saves information of the origination address of said gateway; and
a control unit that collates the origination address of packet data received from said gateway with origination addresses that are saved in said memory unit.

50. A radio communication method realized by a base station, comprising a transmission step of transmitting information of the origination addresses of neighboring base stations of said base station to a gateway by way of a mobility management node.

51. A radio communication method realized by a base station, comprising a transmission step of transmitting to a gateway packet data that contain in a header information of the origination addresses of neighboring base stations of said base station.

52. A radio communication method realized by a base station, comprising a transmission step of transmitting, to a gateway by way of a mobility management node, information of the origination address of a movement destination base station with which a radio communication apparatus has performed handover from said base station.

53. A radio communication method realized by a gateway, comprising a reception step of receiving, from a base station by way of a mobility management node, information of the origination addresses of neighboring base stations of said base station.

54. A radio communication method realized by a gateway, comprising a reception step of receiving, from a base station, packet data that contain in a header information of the origination addresses of neighboring base stations of said base station.

55. A radio communication method realized by a gateway, comprising a reception step of receiving, from a base station by way of a mobility management node, information of the origination address of a movement destination base station with which a radio communication apparatus has performed handover from said base station.

56. A radio communication method realized by a gateway that is connected between a base station and a host gateway, comprising a transmission step of, after a decision that handover is to be performed that accompanies change to said gateway, transmitting to said host gateway information of the origination address of said gateway.

57. A radio communication method realized by a host gateway connected to a gateway that is connected to a base station, comprising a reception step of, after a decision that a radio communication apparatus is to perform handover that accompanies change to said gateway, receiving information of the origination address of said gateway from said gateway.
